# EUROPEAN PATENT SPECIFICATION

(11) **EP 3 955 352 B1**
(45) Date of publication and mention of the grant of the patent: **04.06.2025**
(21) Application number: 20190900.9
(22) Date of filing: 13.08.2020
(51) Int. Cl.: H01M 8/0258, H01M 8/2483, H01M 8/12, H01M 8/04007

(54) **CELLS STACK FOR AN ELECTROCHEMICAL CELL, FUEL CELL SYSTEM AND ELECTROLYSIS CELL SYSTEM**
ZELLENSTAPEL FÜR EINE ELEKTROCHEMISCHE ZELLE, BRENNSTOFFZELLENSYSTEM UND ELEKTROLYSEZELLENSYSTEM
EMPILEMENT DE PILES POUR UNE PILE ÉLECTROCHIMIQUE, SYSTÈME DE PILE À COMBUSTIBLE ET SYSTÈME DE PILE À ÉLECTROLYSE

(43) Date of publication of application: 16.02.2022
(73) Proprietor: Technische Universität München, 80333 München (DE)
(72) Inventor: HERRMANN, Stephan, 81925 München (DE); HAUCK, Maximilian, 81369 München (DE); SPLIETHOFF, Hartmut, 82140 Olching (DE)
(74) Representative: Hoefer & Partner Patentanwälte mbB

(56) References cited:
- JP-A- S6 280 972
- US-A1- 2010 227 243
- US-A1- 2018 097 250

## Description

The present invention concerns a cell stack for an electrochemical cell, a fuel cell system and an electrolysis cell system having low temperature gradients.

Solid oxide fuel cells are highly efficient in producing electrical power and can also be used as electrolysis cells. However, due to the materials used for the manufacture of the layers of the cell stack of the solid oxide fuel cells or electrolysis cells, these cells are sensitive to heat spots, heat accumulation and temperature differences within the cell stack. The exothermic heat of reaction in the fuel cells is cooled by means of oxidizer and fuel gases fed to the stack. In solid oxide fuel cells including internal reforming, e.g. of methane, large temperature gradients are formed across the cells of the cell stack. This is due to the fact that the endothermic reformation reaction is typically catalysed at a fuel inlet of the cell whereas the exothermic fuel cell reaction is catalysed along the length of the flow field in contact with the membrane so that at the fuel inlet a cool region is formed and along the length of the flow field a hot region is formed. In order to improve the heat dissipation in a solid oxide fuel cell, US 10,355,294 B2 teaches a substrate assembly including an air flow form plate, a fuel flow form plate and an anode. The fuel flow form plate is positioned over the air flow form plate and has a first end and a second end. The fuel flow form plate partially defines a plurality of first channels extending from the first end to the second end. The fuel flow form plate also defines a plurality of second channels extending from the first end to the second end. The plurality of second channels defines a plurality of apertures, where a portion of the apertures extends from the plurality of second channels to the plurality of first channels. The anode is positioned over the fuel flow form plate. The anode partially defines the plurality of first channels such that the fuel flow form plate and the anode define the plurality of first channels. The portion of the plurality of apertures is configured to channel a flow of fuel from the plurality of second channels to the plurality of first channels which assists in distributing cooler portions of the fuel produced by the reforming reaction at the fuel inlets.

However, the production of such substrate assemblies is complicated and thus, cost intensive and heat dissipation might not be sufficient.

Starting from this prior art, it is a problem underlying the present invention to provide a fuel cell stack as well as a fuel cell system and an electrolysis cell system having improved heat dissipation and thus, low temperature gradients without the necessity of using complicated flow field structures.

Accordingly, the problem is solved by a cell stack for an electrochemical cell as defined in claim 1. The sub-claims contain advantageous embodiments of the present invention.

JPS6280972 and US2010/227243 disclose cell stacks of the related prior art.

The electrochemical cell for which the cell stack is used is not particularly limited but preferably comprises fuel cells and electrolysis cells, wherein solid oxide fuel cells are particularly mentioned. The cell stack includes a first cell comprising a first bipolar plate and a second cell comprising a second bipolar plate. The first and second bipolar plates function to distribute fuel used for the cell reaction (in fuel cells, the cell reaction at the anode side is the oxidation of the fuel; in electrolysis cells, the cell reaction at the anode side is the reduction of protons of water to hydrogen). The number of cells is not particularly limited and the cell stack may include only two cells but may preferably include tens or hundreds of cells. In case the cell stack includes a plurality of cells, these cells include at least one first cell and at least one second cell in accordance with the present invention. However, it is preferable, that the cell stack includes a plurality of first cells and a plurality of second cells in accordance with the present invention, wherein further preferable, the first cells and second cells are alternately stacked.

The form and shape of the bipolar plates is particularly not limited in so far as the requirements of claim 1 are fulfilled. Preferably, each bipolar plate has a rectangular form, which can also be quadrangular and each bipolar plate has a first surface and an opposite second surface. Each first surface comprises an anode flow field. The second surface can preferably include a cathode flow field, however, this is not essential and a cathode flow field can also be provided by a separate bipolar plate.

An anode flow field in the sense of the present invention functions to distribute fuel for the cell reaction across the whole area of the first surface of the bipolar plate from a fuel inlet to a fuel outlet as will be described below. Accordingly, the first anode flow field comprises a plurality of essentially parallel channels, which provide flow paths for the fuel across the first flow field from a first side of the first anode flow field to an opposite second side of the first anode flow field with the provisio that fuel flows along a first direction (direction of fuel flowing from the first side to the opposite second side of the first anode flow field). In addition, the second bipolar plate comprises a second anode flow field comprising a plurality of parallel channels, which provide flow paths for the fuel across the second flow field from a first side of the second anode flow field to an opposite second side of the second anode flow field with the provisio that fuel flows along a second direction (direction of fuel flowing from the first side to the opposite second side of the second anode flow field).

In particular, the plurality of channels of each of the anode flow fields is arranged essentially parallel, which means that the majority of the channels, which extend from a first side of the anode flow field to a second side of the anode flow field, is arranged parallel. However, the channels may be continuous or discontinuous and particularly at the boundary portions of the flow fields, irregular, shorter or smaller channels may be provided which do not fully extend across the whole flow fields, but may be used to guide the fuel from fuel inlets to the channels extending from the first side of the anode flow fields across the cell reaction zone in the inner parts of the flow fields to the second side of the anode flow fields. The same may be the case at the second side of the anode flow fields. Here, also irregular, shorter or smaller channels may be provided guiding the fuel, which is flown across the anode flow fields to fuel outlets.

According to the present invention, the first direction and the second direction are different. The respective directions have to be interpreted such that they denominate the flow direction of the fuel and not the extension direction of the channels across the anode flow fields. Therefore, the direction of fuel flowing across the reaction zone in the second anode flow field is different from the direction of fuel flowing across the reaction zone in the first anode flow field.

The cell stack may comprise further layers or elements, like e.g. bipolar plates at each cathode side of the first and second cells, anodes and cathodes, gas diffusion layers and membranes provided between the cathodes and anodes.

Due to the difference in the flow directions of the fuel flowing in the first anode flow field and flowing in the second anode flow field, i.e. due to the different directions of the first and second direction, an internal reforming area, which has a low temperature due to the endothermic reforming reaction, is provided at each first side of each of the anode flow fields (first and second anode flow fields) and expands in the direction of each respective second side of each of the anode flow fields so that cool fuel can easily be distributed over the whole first and second anode flow fields at which the exothermic cell reaction occurs. The cooled fuel is distributed homogeneously over a great portion of the anode flow field areas in each of the bipolar plates, which assists in reducing a temperature gradient within the cell stack by attenuating the cooling effect of the reforming reaction. Therefore, the inventive cell stack will have an extended life span and also an increased cell voltage.

According to an embodiment, the first direction is orthogonal or opposite to the second direction, which increases the distribution of cooled fuel from the endothermic reforming reaction across each of the first and second anode flow field and further lowers the temperature gradient within the cell stack.

In order to facilitate the cell stack structure, and according to the invention, fuel inlets of the first cell and the second cell are superimposed and/or fuel outlets of the first cell and the second cell are superimposed when viewed in the stacking direction. In this regard, the stacking direction means the direction perpendicular to the extension areas of the anode flow fields.

According to a further preferable embodiment, the fuel inlets and the fuel outlets of each of the first and second bipolar plates (and anode flow fields respectively) are positioned opposite to each other, which means that the fuel inlet of the first bipolar plate is arranged at one side of the first anode flow field and the fuel outlet of the first bipolar plate is arranged at an opposite side of the first anode flow field. This further means that the fuel inlet of the second bipolar plate is arranged at one side of the second anode flow field and the fuel outlet of the second bipolar plate is arranged at an opposite side of the second anode flow field.

According to a further embodiment, the fuel inlets are provided at mid portions of the third sides of the first and second anode flow fields and the fuel outlets are provided at mid portions of the fourth sides of the first and second anode flow fields. In other words, in this particular embodiment, it is preferable that each bipolar plate has a rectangular shape and the bipolar plate and therefore also the anode flow field thereof, includes a first, a second, a third and a fourth side. The channels arranged across the anode flow field extend from the first side of the anode flow field to the second side of the anode flow field, which is opposite to the first side of the anode flow field. Remaining third and fourth sides are also opposite to each other and at these sides, and more particular, at mid portions of these sides, the fuel inlets and fuel outlets are arranged.

The term "mid portion" is to be understood as the central portion of the respective side and may be exactly in the middle of said side or may be shifted towards an edge of the anode flow field but is not located at an edge of the anode flow field. With the fuel inlets at mid portions of the third sides, fuel outlets at mid portions of the fourth sides of the anode flow fields and the plurality of parallel channels extending across the anode flow field from the first sides to the second sides, fuel entering the fuel inlets is guided along the third side in order to reach the first side at which the fuel enters the channels crossing the cell reaction zone of the anode flow field. Consequently, the cool region caused by the reformation reaction at the fuel inlet is spread over a wide area along the third side of the anode flow field along which the fuel is guided to the first side and temperature gradients are more easily attenuated and temperature differences reduced by flow of the fuel along the third side. In other words, the cooling effect is spread over a wider area so that temperature differences between cool areas and hot areas can be homogenized.

In order to further attenuate temperature gradients within the cell stack, it is preferable that when the cell stack is viewed in the stacking direction, the first side of the first anode flow field is aligned upon the second side of the second anode flow field. This arrangement of the first cell and the second cell causes the fuel flowing across the cell reaction zone in the first anode flow field to flow into an opposite direction of the fuel flowing across the cell reaction zone of the second anode flow field since fuel always flows from the first side of an anode flow field to the second side thereof. This arrangement further causes fuel entering the fuel inlet of the first anode flow field to flow along the third side of the first anode flow field in a direction which is opposite to the direction into which fuel entering the fuel inlet at the third side of the second anode flow field flows. Accordingly, when regarding the temperature gradients of the cell stack, cooled fuel obtained by reforming reaction at the fuel inlets is distributed along the complete third side and parts of each of the first sides of the first and second anode flow fields, which is a very wide area for distributing cooled fuel, so the cell stack is highly prevented from overheating, temperature gradients are reduced and the life span of the cell stack is high.

According to a further preferable embodiment, at least one barrier element is provided at the third side of the first anode flow field at a hind portion of the fuel inlet facing away from the first side of the first anode flow field. In addition, at least one barrier element is provided at the third side of the second anode flow field at a hind portion of the fuel inlet facing away from the first side of the second anode flow field.

A barrier element in the sense of the present invention is a constitutional element of the bipolar plate, which is dimensioned and shaped to prevent fuel from flowing across the direction at which the barrier element is positioned. According to the embodiment, in the first cell, all fuel is then forced to flow into the direction away from the barrier element and along the third side towards the first side of the first anode flow field. In the second cell, due to the arrangement of the barrier element, all fuel is then forced to flow into the direction away from the barrier element and along the third side towards the first side of the second anode flow field. Also, in this embodiment, the third sides of the first cell and the second cell are arranged upon each other when viewing the cell stack in the stacking direction and the first side of the first cell is aligned upon the second side of the second cell. As in the above-captioned embodiment, when analysing the temperature gradients of the cell stack, cooled fuel obtained by reforming reaction at the fuel inlets is distributed along the complete third sides and parts of each of the first sides of the first and second anode flow fields which is a very wide area for distributing cooled fuel, so the cell stack is highly prevented from overheating and temperature gradients could be reduced whereby the life span of the cell stack is improved.

As an improvement to the above-captioned embodiment, the implementation of the barrier elements guarantees that all fuel entering the respective fuel inlet of the first or second anode flow field, is forced into the desired direction along the third sides of the first and second flow fields.

In order to force fuel to flow across the whole anode flow field, at least one barrier element is provided at the fourth side of the first anode flow field at a hind portion of the fuel outlet facing away from the second side of the first anode flow field and at least one barrier element is provided at the fourth side of the second anode flow field at a hind portion of the fuel outlet facing away from the second side of the second anode flow field. This improves the cell reaction rate because fuel cannot take the shortest way directly from the first sides of each of the first and second anode flow fields to the fuel outlets but is forced to pass the cell reaction zones of the first and second anode flow fields.

A further improved homogeneous heat distribution all over the cell stack can be obtained when the fuel inlets and the fuel outlets are arranged at opposite diagonal edges of the first anode flow field and the second anode flow field.

Furthermore, the manufacturing costs of the cell stack can be reduced according to an embodiment in which the plurality of channels of the first anode flow field is parallel to the plurality of channels of the second anode flow field.

In order to further attenuate temperature gradients within the cell stack, it is preferable that when the cell stack is viewed in the stacking direction, the first side of the first anode flow field is aligned upon the second side of the second anode flow field. As for the embodiment in which the fuel inlets and fuel outlets are provided at mid portions of third and fourth sides of the anode flow fields, in the present embodiment, in which the fuel inlets and fuel outlets are arranged at opposite edges of the anode flow fields, this arrangement of the first cell and the second cell causes the fuel flowing across the cell reaction zone of the first anode flow field to flow into an opposite direction of the fuel flowing across the cell reaction zone of the second anode flow field since fuel always flows from the first side of an anode flow field to the second side thereof.

This arrangement further forces fuel entering the fuel inlet of the first anode flow field to flow along the first side so that the cool area obtained by the reforming reaction at the anode inlet in the first bipolar plate is extended along the complete first side of the first anode flow field. In addition, this arrangement further causes fuel entering the fuel inlet of the second anode flow field to flow along the first side of the second flow field which is opposite to the first side of the first anode flow field so that the cool area obtained by the reforming reaction at the anode inlet in the second bipolar plate is extended along the complete first side of the second anode flow field. Accordingly, the two opposite first sides of the first and second anode flow field distribute cooled fuel to the opposite second sides and into each cell reaction zone of the respective flow fields so that the cell stack shows a very homogeneous temperature distribution without or with at least highly reduced temperature gradients so that the cell stack is highly prevented from overheating and the life span of the cell stack is increased while showing increased cell voltages.

In a further preferable embodiment, the fuel inlet of the first anode flow field is at the edge of the second side and the third side of the first anode flow field, the fuel outlet of the first anode flow field is at the edge of the first side and the fourth side of the first anode flow field, at least one barrier element is provided at the second side of the first anode flow field at a hind portion of the fuel inlet facing away from the third side of the first anode flow field, and at least one barrier element is provided at the first side of the first anode flow field at a hind portion of the fuel outlet facing away from the fourth side of the first anode flow field. This arrangement has the following advantages: At first, fuel entering the first anode flow field via the fuel inlet at the edge of the second and third side of the first anode flow field, is fully forced to flow along the third side due to the positioning of the barrier element at a hind portion of the anode inlet facing towards the fourth side. Since at the fuel inlet, a cool area is present due to the reforming reaction, cooled fuel then passes along the complete third side of the first anode flow field and enters the cell reaction zone of the first anode flow field from the first side whereby a temperature profile across the first cell can be balanced. In addition, due to the arrangement of the second barrier element at a hind portion of the fuel outlet facing towards the third side, all fuel entering the fuel inlet is forced to pass across the cell reaction zone of the anode flow field before leaving the same via the fuel outlet. The direct flow path along the first side of the first anode flow field to the fuel outlet is blocked by the barrier element.

In the same embodiment, the fuel inlet of the second anode flow field is at the edge of the first side and the third side of the second anode flow field and the fuel outlet of the second anode flow field is at the edge of the second side and the fourth side of the second anode flow field. Accordingly, fuel entering the fuel inlet of the second anode flow field flows along the first side in order to flow across the cell reaction zone of the second anode flow field. Accordingly, when viewing the cell stack in a stacking direction, the first side of the first anode flow field and the fist side of the second anode flow field are at opposite sides of the anode flow fields so that cool areas are provided at these both opposite first sides so that the temperature gradient of the cell stack can be reduced to a great extent which further increased the life span of the cell stack.

According to a further preferable embodiment, at least one barrier element is provided at the third side of the second anode flow field at a hind portion of the fuel inlet facing away from the first side of the second anode flow field so that all fuel is forced to flow along the first side of the second anode flow field and is blocked to flow directly along the third side to the second side of the second anode flow field, whereby the cell reaction performance can be improved and at the same time heat distribution can be balanced more easily.

In a further preferable embodiment, the fuel inlet of the first anode flow field is at the edge of the first side and the third side of the first anode flow field, wherein the fuel outlet of the first anode flow field is at the edge of the second side and the fourth side of the first anode flow field. Also in this case, fuel entering the fuel inlet of the first anode flow field can flow along the complete first side of the first anode flow field before passing there through so that fuel leaving the cool area at which the reformation reaction occurs, enters the first anode flow field and balances the temperature gradient between the cool area at the first side and the hot area of the cell reaction within the first anode flow field between the first side and the second side thereof.

The temperature distribution can be further balanced according to the embodiment, in which at least one barrier element is provided at the third side of the first anode flow field at a hind portion of the fuel inlet facing away from the first side of the first anode flow field. Accordingly, all fuel entering the fuel inlet is then forced to flow along the first side, thus, increasing the amount of cooled fuel entering the first anode flow field from its first side.

Furthermore, the fuel inlet of the second anode flow field is at the edge of the second side and the third side of the second anode flow field, wherein the fuel outlet of the second anode flow field is at the edge of the first side and the fourth side of the second anode flow field, and at least one barrier element is provided at the second side of the second anode flow field at a hind portion of the fuel inlet facing away from the third side of the second anode flow field, and at least one barrier element is provided at the first side of the second anode flow field at a hind portion of the fuel outlet facing away from the fourth side of the second anode flow field.

Accordingly, fuel entering the fuel inlet of the second anode flow field is forced to flow along the third side of the second anode flow field before crossing the cell reaction zone of the second anode flow field from the first side to the second side. In particular when viewing the cell stack in the stacking direction and the first side of the first anode flow field is aligned upon the second side of the second anode flow field, opposite first side of the first anode flow field and second side of the second anode flow field as well as the third side of the second anode flow field are provided with cool areas so that cooled fuel enters the first and second anode flow fields from opposite sides and temperature gradients between the first and second cells and furthermore within the whole cell stack can be reduced to a great extent so that the life span of the cell stack is greatly increased due to very low likelihood of overheating by the cell reaction.

According to a further preferable embodiment, the fuel inlet of the first anode flow field is at the edge of the first side and the fourth side of the first anode flow field, the fuel outlet of the first anode flow field is at the edge of the second side and the third side of the first anode flow field, wherein at least one barrier element is provided at the fourth side of the first anode flow field at a hind portion of the fuel inlet facing away from the first side of the first anode flow field. In this arrangement, the barrier element blocks fuel entering the fuel inlet of the first anode flow field to flow along the fourth side to the second side. Moreover, the fuel cooled from the reforming reaction is guided long the complete first side of the first anode flow field in order to cross the cell reaction zone of the first anode flow field, whereby heat gradients between the cool area at the entrance of the fuel inlet and the hot area between the first and second side of the first anode flow field can be reduced effectively.

Furthermore, the fuel inlet of the second anode flow field is at the edge of the second side and the fourth side of the second anode flow field, the fuel outlet of the second anode flow field is at the edge of the first side and the third side of the second anode flow field, and at least one barrier element is provided at the second side of the second anode flow field at a hind portion of the fuel inlet facing away from the fourth side of the second anode flow field, and at least one barrier element is provided at the first side of the second anode flow field at a hind portion of the fuel outlet facing away from the third side of the second anode flow field. By this arrangement, fuel entering the fuel inlet of the second anode flow field is forced to flow along the fourth side before crossing the cell reaction zone of the anode flow field from the first side to the second side of the second anode flow field. The barrier element at the hind portion of the fuel outlet blocks fuel to enter the fuel outlet without having crossed the cell reaction zone of the second anode flow field so that the cell reaction performance can be further improved.

When analysing the heat distribution of the whole cell stack, it can be seen that due to the guidance of the fuel in the first anode flow field and the guidance of the fuel in the second anode flow field, both opposite first sides of the first and second anode flow fields are supported with cooled fuel entering the respective fuel inlets and in addition thereto, the third side of the first anode flow field and the opposite fourth side of the second anode flow field are cooled by fuel reformed at the fuel inlets of the respective first and second anode flow fields. Therefore, almost each side of the cell stack is provided with cooled fuel by the arrangement of the first and second cells, which reduces the temperature gradients throughout the whole cell stack largely and thus, increases the life span thereof due to the prevention of overheating while increasing the cell voltages. More particular, each side obtains merely half of the cooling performance, which further reduces the temperature gradient through the stack.

According to a further preferable embodiment, the fuel inlet of the first anode flow field is at the edge of the second side and the fourth side of the first anode flow field, the fuel outlet of the first anode flow field is at the edge of the first side and the third side of the first anode flow field, at least one barrier element is provided at the second side of the first anode flow field at a hind portion of the fuel inlet facing away from the fourth side of the first anode flow field, and at least one barrier element is provided at the first side of the first anode flow field at a hind portion of the fuel outlet facing away from the third side of the first anode flow field. In this arrangement, fuel is forced to flow from the fuel inlet of the first anode flow field along the fourth side before crossing the cell reaction zone of the first anode flow field from the first side to the second side thereof. Fuel which has crossed the cell reaction zone of the first anode flow field further flows along the third side of the first anode flow field before exiting the first anode flow field via the fuel outlet. Accordingly, cooled fuel obtained by the reforming reaction at the fuel inlet of the first anode flow field is distributed along the complete fourth side and is further distributed along the first side prior to crossing the cell reaction zone of the anode flow field. Therefore, the cool area is spread over a very wide area so that heat gradients within the first anode flow field can be reduced largely.

Furthermore, the fuel inlet of the second anode flow field is at the edge of the first side and the fourth side of the second anode flow field, wherein the fuel outlet of the second anode flow field is at the edge of the second side and the third side of the second anode flow field, and optionally at least one barrier element is provided at the fourth side of the second anode flow field at a hind portion of the fuel inlet facing away from the first side of the second anode flow field. Accordingly, fuel is guided along the first side after having entered the fuel inlet of the second anode flow field, in particular, in case a barrier element is provided as outlined above.

When viewing such cell stack along the stacking direction, almost each side of the cell stack is provided with cooled fuel by the arrangement of the first and second cells, which reduces the temperature gradient throughout the whole cell stack and thus, increases the life span thereof due to the prevention of overheating.

According to an alternative preferable embodiment, the plurality of channels of the first anode flow field is perpendicular to the plurality of channels of the second anode flow field. Therefore, the flow of the fuel in the cell reaction zone of the first anode flow field is perpendicular to the flow of fuel in the cell reaction zone of the second anode flow field. This can further improve a balanced temperature profile of the cell stack and can homogenize heat gradients within the cell stack.

According to a preferable embodiment thereof, the fuel inlet of the first anode flow field is at the edge of the first side and the third side of the first anode flow field, the fuel outlet of the first anode flow field is at the edge of the second side and the fourth side of the first anode flow field. Accordingly, fuel entering the fuel inlet of the first anode flow field flows along the first side so that the cool area is distributed along said first side and cooled fuel enters the cell reaction zone of the first anode flow field between the first side and the second side thereof, thus, greatly balancing the hot area of the cell reaction zone between the first and second sides.

When optionally providing at least one barrier element at the third side of the first anode flow field at a hind portion of the fuel inlet facing away from the first side of the first anode flow field, all fuel entering the fuel inlet is forced to flow along the first side of the first anode flow field before crossing the cell reaction zone of the anode flow field from the first side to the second side thereof.

Furthermore, the fuel inlet of the second anode flow field is at the edge of the first side and the third side of the second anode flow field, wherein the fuel outlet of the second anode flow field is at the edge of the second side and the fourth side of the second anode flow field. Accordingly, fuel entering the fuel inlet of the second anode flow field is guided along the first side thereof, in particular, when providing at least one barrier element at the third side of the second anode flow field at a hind portion of the fuel inlet facing away from the first side of the second anode flow field. Consequently, cooled fuel is distributed over the complete first side of the second anode flow field and enters the cell reaction zone between the first side and the second side, thus, balancing the temperature gradient between the cool area at the entrance of the fuel inlet and the hot area between of the cell reaction zone between the first side and the second side of the second anode flow field.

When viewing the cell stack in a stacking direction, two perpendicular sides, i.e. the first side of the first anode flow field and the first side of the second anode flow field are cool areas, distributing cooled fuel across the cell reaction zones of the anode flow fields so that temperature gradients throughout the whole cell stack can be balanced and homogenized which reduces the likelihood of overheating of the cell stack and thus, improves the life span of the cell stack.

According to a further preferable embodiment, the fuel inlet of the first anode flow field is at the edge of the second side and the fourth side of the first anode flow field, wherein the fuel outlet of the first anode flow field is at the edge of the first side and the third side of the first anode flow field. Accordingly, fuel entering the fuel inlet of the first anode flow field first flows along the fourth side thereof before crossing the cell reaction zone of the first anode flow field from the first side to the second side, in particular, when at least one barrier element is provided at the second side of the first anode flow field at a hind portion of the fuel inlet facing away from the fourth side of the first anode flow field. Therefore, the cool area is extended along the complete fourth side of the first anode flow field and cooled fuel flows along said fourth side and enters the first side in order to balance a heat gradient between the fuel inlet and the cell reaction zone between the first side and the second side of the first anode flow field. By providing at least one barrier element at the first side of the first anode flow field at a hind portion of the fuel outlet facing away from the third side of the first anode flow field, the cell reaction performance can be improved since all is forced to flow across the cell reaction zone of the anode flow field from the first side to the second side before exiting the first anode flow field via the fuel outlet.

Furthermore, the fuel inlet of the second anode flow field is at the edge of the second side and the fourth side of the second anode flow field, wherein the fuel outlet of the second anode flow field is at the edge of the first side and the third side of the second anode flow field, wherein at least one barrier element is provided at the second side of the second anode flow field at a hind portion of the fuel inlet facing away from the fourth side of the second anode flow field, and wherein at least one barrier element is provided at the first side of the second anode flow field at a hind portion of the fuel outlet facing away from the third side of the second anode flow field. Accordingly, fuel entering the fuel inlet of the second anode flow field is forced to flow along the complete fourth side of the second anode flow field before entering the cell reaction zone between the first side and the second side thereof. Also in here, the cool area is extended along the complete fourth side of the second anode flow field, which is opposite the first side of the first anode flow field so that when viewing the cell stack along the stacking direction almost all sides of the cell stack include a cool region or are at least distributed with cooled fuel so that the cell stack is greatly prevented from overheating due to balancing of the temperature gradients within the cell stack. Consequently, the cell stack has a largely increased life span.

According to a further preferable embodiment, the fuel inlet of the first anode flow field is at the edge of the second side and the third side of the first anode flow field, the fuel outlet of the first anode flow field is at the edge of the first side and the fourth side of the first anode flow field, at least one barrier element is provided at the second side of the first anode flow field at a hind portion of the fuel inlet facing away from the third side of the first anode flow field, and at least one barrier element is provided at the first side of the first anode flow field at a hind portion of the fuel outlet facing away from the fourth side of the first anode flow field. In this embodiment, fuel entering the fuel inlet of the first anode flow field is forced to flow along the complete third side of the first anode flow field before flowing along the first side thereof and entering the cell reaction zone between the first side and the second side. Therefore, the cool area obtained by the reforming reaction is spread along the complete third side and along the first side so that heat gradients within the first anode flow field can be reduced.

Furthermore, the fuel inlet of the second anode flow field is at the edge of the first side and the fourth side of the second anode flow field, wherein the fuel outlet of the second anode flow field is at the edge of the second side and the third side of the second anode flow field. Accordingly, fuel entering the fuel inlet of the second anode flow field flows along the first side, in particular, when at least one barrier element is provided at the fourth side of the second anode flow field at a hind portion of the fuel inlet facing away from the first side of the second anode flow field, before entering the cell reaction zone between the first side and the second side of the second anode flow field. Consequently, the complete first side is cooled by cooled fuel produced at the fuel inlet where the reforming reaction occurs.

When further viewing the cell stack in the stacking direction the third side of the first anode flow field which includes a cool area and the first side of the second anode flow field which includes a cool area are aligned. In addition, the first side of the first anode flow field includes a cool area so that at least two sides of the cell stack are provided with cooled fuel so that temperature gradients within the cell stack can be at least partially balanced and reduced.

According to a further preferred embodiment, the fuel inlets are integrated into the first and second anode flow fields. This means that the fuel inlets and the fuel outlets form part of the bipolar plate and are not arranged at tab portions outside the flow fields. More particular, the fuel inlets and fuel outlets are provided at respective boundary portions of the first and second anode flow fields. Accordingly, the first anode flow field and the second anode flow field include cell reaction zones surrounded by boundary portions, which are located at the outermost parts of the respective anode flow fields. In other words, boundary portions mean the outermost parts of the anode flow field and cell reaction zones are provided there between.

Guiding channels may be formed around the fuel inlets and fuel outlets, which particularly means that those guiding channels, which guide the fuel from the fuel inlet to the channels extending across the cell reaction zone of the anode flow field and those guiding channels which guide the fuel which has crossed the cell reaction zone of the anode flow field to the fuel outlet, are arranged such that the fuel inlets and fuel outlets are integrated within the guiding channels and/or cell reaction zone channels. This particularly means that the fuel inlets and fuel outlets do not form part of a separate portion of the bipolar plate at which no channels are provided and at which the fuel flowing through the anode flow field cannot support the cell reaction.

Due to the integration of fuel inlets and fuel outlets into the anode flow field of each of the bipolar plates, an internal reforming area, which has a low temperature due to the endothermic reforming reaction, is provided within the bipolar plate so that cool fuel can easily be distributed over the whole anode flow field at which the exothermic cell reaction occurs. Moreover, since the fuel inlets and the fuel outlets are positioned at opposite boundary portions of the respective anode flow field, i.e. at a first side and an opposite second side of the anode flow field, the cooled fuel is distributed homogeneously over the whole anode flow field area in each of the bipolar plates, which assists in reducing a temperature gradient within the cell stack by attenuating the cooling effect of the reforming reaction. Therefore, the inventive cell stack will have an extended life span and also an increased cell voltage.

According to a further preferred embodiment, oxidant inlets and oxidant outlets may be provided in the first bipolar plate and in the second bipolar plate.

In a further preferable embodiment at least one oxidant inlet is integrated into the first bipolar plate and into the second bipolar plate at mid portions of the first anode flow field and the second anode flow field or at edges of the first anode flow field and the second anode flow field, so that when the cell stack is viewed in the stacking direction, the at least one oxidant inlet in each of the first and second bipolar plates are aligned one upon the other. Particularly, the oxidant inlets are not provided at those sides or edges already including fuel inlets or fuel outlets so that the flow of the fuel is not particularly hindered or blocked largely.

In this regard, it is further preferable that the at least one oxidant inlet is integrated into the first anode flow field of the first bipolar plate and into the second anode flow field of the second bipolar plate.

A further aspect of the present invention related to a fuel cell system or electrolysis cell system comprising a cell stack as described above. Due to the use of the inventive cell stack having a homogeneous temperature profile throughout the whole cell stack, in the fuel cell system or electrolysis cell system of the present invention a likelihood of overheating of the fuel cell system or electrolysis cell system is greatly reduced so that the life span of the fuel cell system or electrolysis cell system is increased.

Further details, advantages and features of the present invention are described with respect to the figures:
Fig. 1 shows top views of first and second bipolar plates of a cell stack according to a first embodiment,
Fig. 2 shows top views of first and second bipolar plates of a cell stack according to a second embodiment,
Fig. 3 shows top views of first and second bipolar plates of a cell stack according to a third embodiment,
Fig. 4 shows top views of first and second bipolar plates of a cell stack according to a fourth embodiment,
Fig. 5 shows top views of first and second bipolar plates of a cell stack according to a fifth embodiment,
Fig. 6 shows top views of first and second bipolar plates of a cell stack according to a sixth embodiment,
Fig. 7 shows top views of first and second bipolar plates of a cell stack according to a seventh embodiment, and
Fig. 8 shows top views of first and second bipolar plates of a cell stack according to an eighth embodiment.

In the figures, only the essential features of the present invention are shown. All other features are omitted to improve clarity of the figures. Throughout all figures, same reference signs denominate same elements or components of the inventive cell stack.

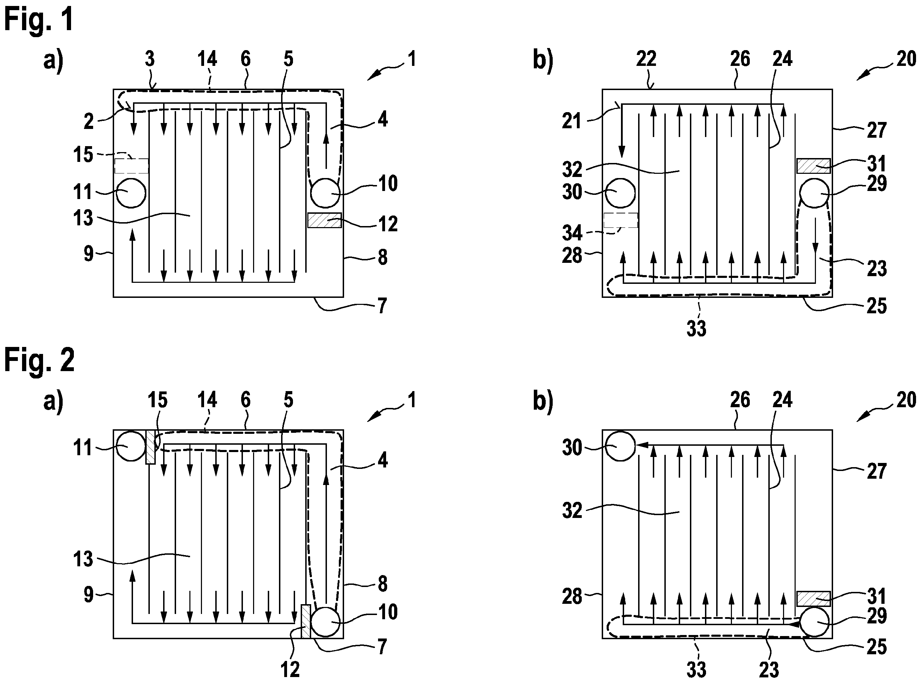

Figure 1 shows in the left figure a) a first bipolar plate 1 of a cell stack according to a first embodiment of the present invention. The first bipolar plate 1 has a rectangular shape with low thickness and includes a first surface 2 and an opposite second surface 3. A first anode flow field 4 is provided at the first surface 2. The first anode flow field 4 comprises a plurality of parallel channels 5 providing flow paths for the fuel across the first anode flow field 4 from a first side 6 of the first anode flow field 4 to a second side 7 of the first anode flow field 4, which is opposite to the first side 6.

A fuel inlet 10 is integrated into the first anode flow field 4 at a boundary portion of the first anode flow field 4. More particular, the fuel inlet is provided at a mid portion of a third side 8 of the first anode flow field 4. In addition, a fuel outlet 11 is integrated into the first anode flow field 4 at a boundary portion of the first anode flow field 4, and in particular at a mid portion of a fourth side 9 of the first anode flow field 4.

A barrier element 12 is provided at the third side 8 and in particular at a hind portion of the fuel inlet 10 facing away from the first side 6 of the first anode flow field 4. Accordingly, fuel entering the fuel inlet 10 is first guided along half of the third side 8 and along the first side 6 before entering cell reaction zone 13 at which the cell reaction of an electrochemical cell including the cell stack occurs. In case the electrochemical cell is a solid oxide fuel cell, the cell reaction occurring in the cell reaction zone 13 is the oxidation of fuel, like e.g. hydrogen, which is oxidized to water molecules.

At the fuel inlet 10 a further reaction occurs, i.e. a reforming reaction of carbohydrates e.g. reforming methane to produce hydrogen necessary the cell reaction. Said reforming reaction occurs at the fuel inlet 10 and is endothermic so that it consumes energy to produce cooled fuel, which is guided along the third side 8 and subsequently along the first side 6 prior to entering the cell reaction zone 13 between the first side 6 and the second side 8 of the first anode flow field 4.

Due to the barrier element 12, the fuel entering the fuel inlet 10 only flows into one direction along the third side 8. Therefore, the low temperature of the cooled fuel is kept until it flows along the first side 6 and enters the cell reaction zone 13. The cell reaction zone 13 is a hot area due to the exothermic cell reaction. However, by supplying cooled fuel along the third side 8 and the first side 6 of the first anode flow field 4, a temperature gradient between the fuel inlet 10 and the cell reaction zone 13 can be reduced so that a temperature profile across the first anode flow field 4 is balanced. Reference sign 14 shows cool areas in which cooled fuel is distributed.

In the first bipolar plate 1 of Figure 1a) fuel flows along a first direction from the first side 6 of the first anode flow field 4 to the second side 7 of the first anode flow field 4.

In order to improve the cell reaction performance, a further optional barrier element 15 can be provided at the fourth side 9 and further at a hind side of the fuel outlet 11 facing away from the second side 7. Accordingly, all fuel is forced to flow across the whole cell reaction zone 13.

The right side of Figure 1 Figure b) shows a second bipolar plate 20 of the cell stack according to the first embodiment of the present invention. In the cell stack, the first bipolar plate 1 and the second bipolar plate 20 can be provided in adjacent first and second cells of an electrochemical cell. Further cells including further first and second bipolar plates 1, 20 may additionally be stacked in the cell stack, preferably in an alternating arrangement.

The second bipolar plate 20 is constructed almost analogously to the first bipolar plate 1. Accordingly, also the second bipolar plate 20 has a rectangular shape and includes a first surface 21 and an opposite second surface 22. A second anode flow field 23 is provided at the first surface 21. The second anode flow field 23 comprises a plurality of parallel channels 24 providing flow paths for the fuel across the second anode flow field 23 from a first side 25 of the second anode flow field 23 to a second side 26 of the second anode flow field 23, which is opposite to the first side 25.

A fuel inlet 29 is integrated into the second anode flow field 23 at a boundary portion of the second anode flow field 23. More particular, the fuel inlet 29 is provided at a mid portion of a third side 27 of the second anode flow field 23. In addition, a fuel outlet 30 is integrated into the second anode flow field 23 at a boundary portion of the second anode flow field 23, and in particular at a mid portion of a fourth side 28 of the second anode flow field 23.

A barrier element 31 is provided at the third side 27 and in particular at a hind portion of the fuel inlet 29 facing away from the first side 25 of the second anode flow field 23. Accordingly, fuel entering the fuel inlet 29 is first guided along half of the third side 27, however, in a direction opposite to the direction in which the fuel, entering the fuel inlet 10 flows in the first anode flow field 4. In the second anode flow field 23, the fuel is further guided along the first side 25 before entering the cell reaction zone 32 at which the cell reaction of the electrochemical cell occurs.

Also at the fuel inlet 29 a reforming reaction of e.g. reforming methane to produce hydrogen for the cell reaction occurs. Said reforming reaction occurs at the fuel inlet 29 and is again endothermic so that it consumes energy and produces cooled fuel, which is guided along the third side 27 and subsequently along the first side 25 prior to entering the cell reaction zone 32 between the first side 25 and the second side 26 of the second anode flow field 23.

Due to the barrier element 31, the fuel entering the fuel inlet 29 only flows into one direction along the third side 27 which, as already outlined above, is the opposite side of the third side 8 along which the fuel entering the fuel inlet 10 flows in the first anode flow field 4.

Therefore, the low temperature of the cooled fuel is kept until it flows along the first side 25 and enters the cell reaction zone 32 in order to reduce a temperature gradient between the fuel inlet 29 and the cell reaction zone 32 so that the temperature profile across the second anode flow field 23 is balanced, too. Reference sign 33 shows cool areas in which cooled fuel is distributed. In the second bipolar plate 20 of Figure 1b) fuel flows along a second direction. As can be seen, when stacking cells including the first bipolar plate 1 and the second bipolar plate 20, the first direction into which fuel flows across the first anode flow field 4 is different, and more particular opposite to the second direction, into which fuel flows across the second anode flow field 23 so that throughout the whole cell stack a temperature gradient is effectively reduced.

In order to improve the cell reaction performance in the second anode flow field 23, a further optional barrier element 34 can be provided at the fourth side 28 and further at a hind side of the fuel outlet 30 facing away from the second side 26. Accordingly, all fuel is forced to flow across the whole cell reaction zone 32.

In the cell stack according to the first embodiment described with respect to Figure 1, when viewing the cell stack in the stacking direction, the fuel inlets 10, 29 are aligned one upon the other. Also the fuel outlets 11, 30 are aligned one upon the other which facilitates the supply of fuel throughout the cell stack.

In addition, as can be seen from Figures 1a) and 1b), the fuel inlets 10, 29 and the fuel outlets 11, 30 are positioned at opposite boundary portions. Again, when viewing the cell stack in a stacking direction, the first side 6 of the first anode flow field 4 is aligned upon the second side 26 of the second anode flow field 23 so that the flow of the fuel in the first anode flow field 4 is into a direction opposite the flow direction of fuel flowing in the second anode flow field 23. This is illustrated by the respective arrows.

When analysing the temperature profile across the whole cell stack including the first and second bipolar plates 1, 20, due to the supply of cooled fuel along at least three sides of the cell stack, the temperature profile is well balanced and heat gradients are effectively reduced. In other words, when viewing the cell stack in a stacking direction, cool areas 14 and 33 are provided at different sides of the cell stack which harmonizes the temperature differences between hot areas and cool areas within the cell stack, whereby overheating of the cell stack can be prevented and thus, a life span of the cell stack can be increased.

Referring to Figure 2 including Figure 2a and Figure 2b a cell stack according to a second embodiment including a first bipolar plate 1 and a second bipolar plate 20 is shown. The arrangement of the first bipolar cell 1 and the second bipolar cell 20 as well as the elements denominated with the same reference signs are similar to those of the first embodiment.

However, as a difference, the fuel inlet 10 and the fuel outlet 11 of the first anode flow field 4 as well as the fuel inlet 29 and the fuel outlet 30 of the second anode flow field 23 are arranged at opposite edges of the first and second anode flow fields 4 and 23. More particular, fuel inlet 10 is provided at the edge of the second side 7 and the third side 8 and fuel outlet 11 is provided at the edge of the first side 6 and the fourth side 9. In addition, fuel inlet 29 is provided at the edge of the first side 25 and the third side 27 and fuel outlet 30 is provided at the edge of the second side 26 and the fourth side 28.

In addition, a barrier element 12 is provided at the second side 7 at a hind side of the fuel inlet 10 facing away from the third side 8 of the first anode flow field 4 and a further barrier element 15 is provided at the second first side 6 at a hind side of the fuel outlet 11 facing away from the fourth side 9 of the first anode flow field 4.

Accordingly, fuel entering the fuel inlet 10 is guided along the complete third side 8 and along the first side 6 before entering the cell reaction zone 13 via the first side 6 and flowing there across along a first direction. Consequently, the cool zone 14 supplying cooled fuel obtained by the reforming reaction extends along the complete third side 8 and the first side 6 of the first anode flow field 4 so that a temperature gradient within the first anode flow field 4 is reduced.

In the second bipolar cell 20, a barrier element 31 is provided at the third side 27 at a hind side of the fuel inlet 29 facing away from the first side 25 of the second anode flow field 23.

Accordingly, fuel entering the fuel inlet 29 is guided along the complete first side 25 of the second anode flow field 23 before entering the cell reaction zone 32 via the first side 25 and flowing across cell reaction zone 32 along a second direction, which is opposite to the first direction. Consequently, the cool zone 33 supplying cooled fuel obtained by the reforming reaction extends along the complete first side 25 the second anode flow field 23 so that a temperature gradient within the second anode flow field 23 can be reduced.

When analysing the temperature profile across the whole cell stack including the first and second bipolar plates 1, 20, due to the supply of cooled fuel along at least three sides of the cell stack, the temperature profile is balanced and heat gradients are reduced. In other words, when viewing the cell stack in a stacking direction, cool areas 14 and 33 are provided at three different sides of the cell stack which harmonizes the temperature differences between hot areas and cool areas within the cell stack, whereby overheating of the cell stack can be prevented and thus, a life span of the cell stack can be increased.

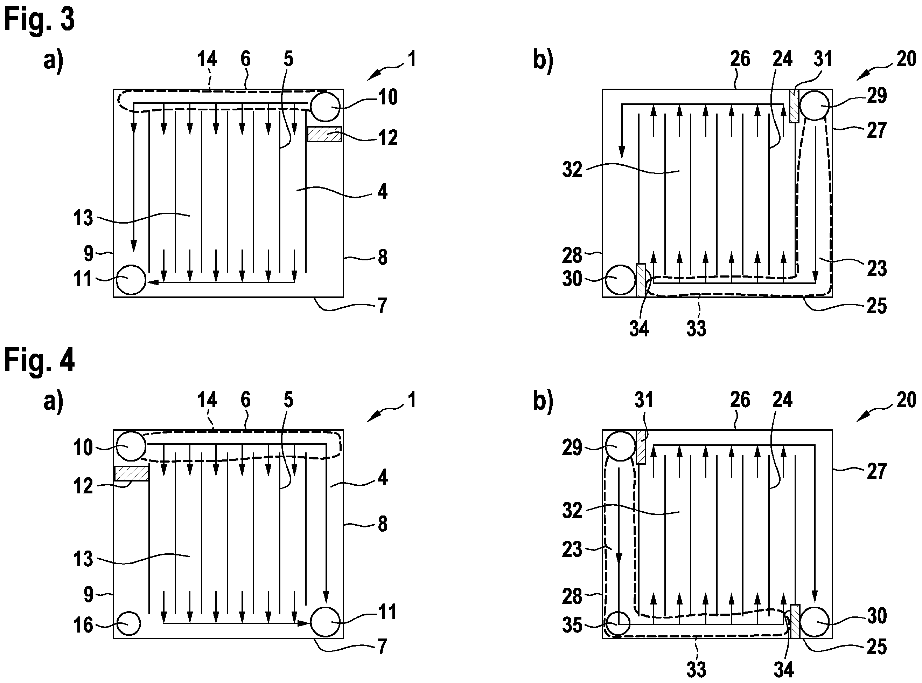

Figure 3 including Figure 3a and Figure 3b shows a cell stack according to a third embodiment including a first bipolar plate 1 and a second bipolar plate 20. The arrangement of the first bipolar cell 1 and the second bipolar cell 20 as well as the elements denominated with the same reference signs are similar to those of the second embodiment.

However, as a difference, fuel inlet 10 is provided at the edge of the first side 6 and the third side 8 and fuel outlet 11 is provided at the edge of the second side 7 and the fourth side 9. In addition, fuel inlet 29 is provided at the edge of the second side 26 and the third side 27 and fuel outlet 30 is provided at the edge of the first side 25 and the fourth side 28.

In addition, a barrier element 12 is provided at the third side 8 at a hind side of the fuel inlet 10 facing away from the first side 6 of the first anode flow field 4.

Accordingly, fuel entering the fuel inlet 10 is guided along the complete first side 6 of the first anode flow field 4 before entering the cell reaction zone 13 via the first side 6 and flowing there across along a first direction. Consequently, the cool zone 14 supplying cooled fuel obtained by the reforming reaction extends along the complete first side 6 so that a temperature gradient within the first anode flow field 4 can be reduced.

In the second bipolar cell 20, a barrier element 31 is provided at the second side 26 at a hind side of the fuel inlet 29 facing away from the third side 27 of the second anode flow field 23. In addition, a barrier element 34 is provided at the first side 25 at a hind side of the fuel outlet 30 facing away from the fourth side 28 of the second anode flow field 23.

Accordingly, fuel entering the fuel inlet 29 is guided along the complete third side 27 and the complete first side 25 of the second anode flow field 23 before entering the cell reaction zone 32 via the first side 25 and flowing across cell reaction zone 32 along a second direction, which is opposite to the first direction. Consequently, the cool zone 33 supplying cooled fuel obtained by the reforming reaction extends along the complete third side 27 and the complete first side 25 of the second anode flow field 23 so that a temperature gradient within the second anode flow field 23 can be reduced greatly.

When analysing the temperature profile across the whole cell stack including the first and second bipolar plates 1, 20, due to the supply of cooled fuel along three sides of the cell stack, the temperature profile is balanced and heat gradients are reduced largely. In other words, when viewing the cell stack in a stacking direction, cool areas 14 and 33 are provided at three different sides of the cell stack which harmonizes the temperature differences between hot areas and cool areas within the cell stack, whereby overheating of the cell stack can be prevented and thus, a life span of the cell stack can be increased.

Figure 4 including Figure 4a and Figure 4b shows a cell stack according to a fourth embodiment including a first bipolar plate 1 and a second bipolar plate 20. The arrangement of the first bipolar cell 1 and the second bipolar cell 20 as well as the elements denominated with the same reference numbers are similar to those of the third embodiment.

However, as a difference, an oxidant inlet 16 is integrated into the first anode flow field 4 of the first bipolar plate 1 at the edge of the second side 7 and the fourth side 9. Additionally, an oxidant inlet 35 is integrated into the second anode flow field 23 of the second bipolar plate 20 at an edge of the first side 25 and the fourth side 28.

As a further difference, fuel inlet 10 is provided at the edge of the first side 6 and the fourth side 9 and fuel outlet 11 is provided at the edge of the second side 7 and the third side 8. In addition, fuel inlet 29 is provided at the edge of the second side 26 and the fourth side 28 and fuel outlet 30 is provided at the edge of the first side 25 and the third side 27.

In addition, a barrier element 12 is provided at the fourth side 9 at a hind side of the fuel inlet 10 facing away from the first side 6 of the first anode flow field 4.

Accordingly, fuel entering the fuel inlet 10 is guided along the complete first side 6 of the first anode flow field 4 before entering the cell reaction zone 13 via the first side 6 and flowing across cell reaction zone 13 along a first direction. Consequently, the cool zone 14 supplying cooled fuel obtained by the reforming reaction extends along the complete first side 6 so that a temperature gradient within the first anode flow field 4 can be reduced.

In the second bipolar cell 20, a barrier element 31 is provided at the second side 26 at a hind side of the fuel inlet 29 facing away from the fourth side 28 of the second anode flow field 23. In addition, a barrier element 34 is provided at the first side 25 at a hind side of the fuel outlet 30 facing away from the third side 27 of the second anode flow field 23.

Accordingly, fuel entering the fuel inlet 29 is guided along the complete fourth side 28 and the complete first side 25 of the second anode flow field 23 before entering the cell reaction zone 32 via the first side 25 and flowing across cell reaction zone 32 along a second direction, which is opposite to the first direction. Consequently, the cool zone 33 supplying cooled fuel obtained by the reforming reaction extends along the complete fourth side 28 and the complete first side 25 of the second anode flow field 23 so that a temperature gradient within the second anode flow field 23 can be reduced greatly.

When analysing the temperature profile across the whole cell stack including the first and second bipolar plates 1, 20, due to the supply of cooled fuel along three sides of the cell stack, the temperature profile is balanced and heat gradients are reduced. In other words, when viewing the cell stack in a stacking direction, cool areas 14 and 33 are provided at three different sides of the cell stack which harmonizes the temperature differences between hot areas and cool areas within the cell stack, whereby overheating of the cell stack can be prevented and thus, a life span of the cell stack can be increased.

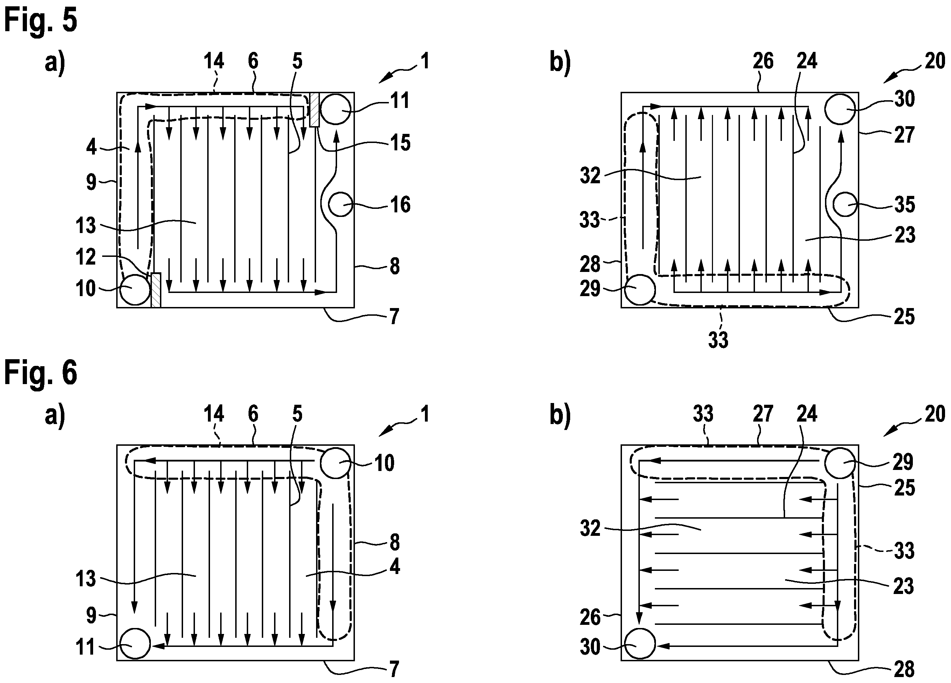

Figure 5 including Figure 5a and Figure 5b shows a cell stack according to a fifth embodiment including a first bipolar plate 1 and a second bipolar plate 20. The arrangement of the first bipolar cell 1 and the second bipolar cell 20 as well as the elements denominated with the same reference numbers are similar to those of the third embodiment.

However, as a difference, fuel inlet 10 is provided at the edge of the second side 7 and the fourth side 9 and fuel outlet 11 is provided at the edge of the first side 6 and the third side 8. In addition, fuel inlet 29 is provided at the edge of the first side 25 and the fourth side 28 and fuel outlet 30 is provided at the edge of the second side 26 and the third side 27.

In addition, a barrier element 12 is provided at the second side 7 at a hind side of the fuel inlet 10 facing away from the fourth side 9 of the first anode flow field 4 and a barrier element 15 is provided at the first side 6 at a hind side of the fuel outlet 11 facing away from the third side 8 of the first anode flow field 4.

Accordingly, fuel entering the fuel inlet 10 is guided along the complete fourth side 9 and the complete first side 6 of the first anode flow field 4 before entering the cell reaction zone 13 via the first side 6 and flowing across cell reaction zone 13 along a first direction. Consequently, the cool zone 14 supplying cooled fuel obtained by the reforming reaction extends along the complete fourth side 9 and the complete first side 6 so that a temperature gradient within the first anode flow field 4 can be reduced greatly.

In the second bipolar cell 20, fuel entering the fuel inlet 29 is guided along the complete first side 25 and the complete fourth side 28 of the second anode flow field 23 and the fuel supplied to the first side 25 enters the cell reaction zone 32 and flows across cell reaction zone 32 along a second direction, which is opposite to the first direction. Consequently, the cool zone 33 supplying cooled fuel obtained by the reforming reaction extends along the complete fourth side 28 and the complete first side 25 of the second anode flow field 23 so that a temperature gradient within the second anode flow field 23 can be reduced greatly.

As an additional element, an oxidant inlet 16 is integrated into the first anode flow field 4 of the first bipolar plate 1 at a mid portion of the third side 8. Additionally, an oxidant inlet 35 is integrated into the second anode flow field 23 of the second bipolar plate 20 at a mid portion of the third side 27.

When analysing the temperature profile across the whole cell stack including the first and second bipolar plates 1, 20, due to the supply of cooled fuel along three different sides of the cell stack, the temperature profile is balanced and heat gradients are reduced. In other words, when viewing the cell stack in a stacking direction, cool areas 14 and 33 are provided at three different sides of the cell stack which harmonizes the temperature differences between hot areas and cool areas within the cell stack, whereby overheating of the cell stack can be prevented and thus, a life span of the cell stack can be increased.

Figure 6 including Figure 6a and Figure 6b shows a cell stack according to a sixth embodiment including a first bipolar plate 1 and a second bipolar plate 20. The arrangement of the first bipolar cell 1 and the second bipolar cell 20 as well as the elements denominated with the same reference numbers are similar to those of the fifth embodiment.

However, as a main difference, the plurality of parallel channels 5 in the first anode flow field is perpendicular to the plurality of parallel channels 24 of the second anode flow field 23. Therefore, fuel flowing through the cell reaction zone 13 flows in a direction perpendicular to the direction into which the fuel flows across the cell reaction zone 32 in the second anode flow field 23.

In other words, the first direction along which fuel flows in the first anode flow field 4 from the first side 6 to the second side 7 is perpendicular or orthogonal to the second direction along which fuel flows in the second anode flow field 23 from the first side 25 to the second side 26.

Fuel inlet 10 is provided at the edge of the first side 6 and the third side 8 and fuel outlet 11 is provided at the edge of the second side 7 and the fourth side 9. In addition, fuel inlet 29 is provided at the edge of the first side 25 and the third side 27 and fuel outlet 30 is provided at the edge of the second side 26 and the fourth side 28. When viewing the cell stack along a stacking direction of the first bipolar plate 1 and the second bipolar plate 20, the first side 6 of the first anode flow field 4 is aligned upon the third side 27 of the second anode flow field 23, whereas the first side 25 of the second anode flow field 23 is aligned upon the third side 8 of the first anode flow field 4.

Accordingly, fuel entering the fuel inlet 10 is guided along the complete first side 6 and the complete third side 8 of the first anode flow field 4 and entering the cell reaction zone 13 via the first side 6 and flowing across cell reaction zone 13 along a first direction. Consequently, the cool zone 14 supplying cooled fuel obtained by the reforming reaction extends along the complete first side 6 and the complete third side 8 so that a temperature gradient within the first anode flow field 4 can be reduced greatly.

In the second bipolar cell 20, fuel entering the fuel inlet 29 is guided along the complete first side 25 and the complete third side 27 of the second anode flow field 23 and the fuel enters the cell reaction zone 32 via the first side 25 and flowing across cell reaction zone 32 along a second direction, which is orthogonal to the first direction. Consequently, the cool zone 33 supplying cooled fuel obtained by the reforming reaction extends along the complete first side 25 and the complete third side 27 of the second anode flow field 23 so that a temperature gradient within the second anode flow field 23 can be reduced greatly.

When analysing the temperature profile across the whole cell stack including the first and second bipolar plates 1, 20, due to the supply of cooled fuel along two different sides of the cell stack, the temperature profile are balanced and heat gradients are reduced. In other words, when viewing the cell stack in a stacking direction, cool areas 14 and 33 are provided at two different sides of the cell stack which harmonizes the temperature differences between hot areas and cool areas within the cell stack, whereby overheating of the cell stack can be prevented and thus, a life span of the cell stack can be increased.

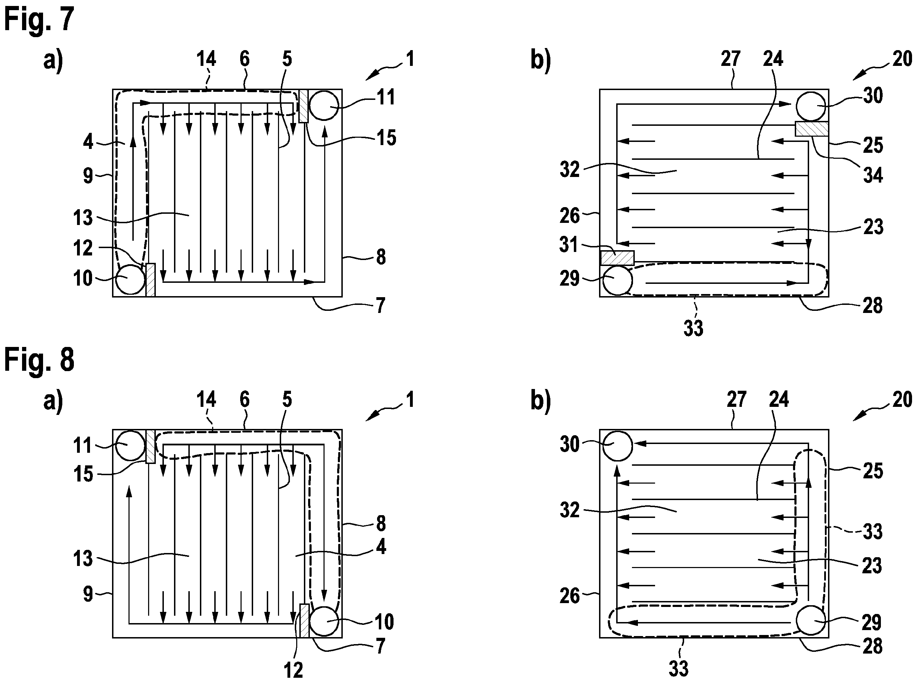

Figure 7 including Figure 7a and Figure 7b shows a cell stack according to a seventh embodiment including a first bipolar plate 1 and a second bipolar plate 20. The arrangement of the first bipolar cell 1 and the second bipolar cell 20 as well as the elements denominated with the same reference numbers are similar to those of the sixth embodiment.

Fuel inlet 10 is provided at the edge of the second side 7 and the fourth side 9 and fuel outlet 11 is provided at the edge of the first side 6 and the third side 8. In addition, fuel inlet 29 is provided at the edge of the second side 26 and the fourth side 28 and fuel outlet 30 is provided at the edge of the second side 25 and the third side 27. When viewing the cell stack along a stacking direction of the first bipolar plate 1 and the second bipolar plate 20, the first side 6 of the first anode flow field 4 is aligned upon the third side 27 of the second anode flow field 23, whereas the first side 25 of the second anode flow field 23 is aligned upon the third side 8 of the first anode flow field 4.

Accordingly, fuel entering the fuel inlet 10 is guided along the complete fourth side 9 and the complete first side 6 of the first anode flow field 4 and entering the cell reaction zone 13 via the first side 6 and flowing across cell reaction zone 13 along a first direction. Consequently, the cool zone 14 supplying cooled fuel obtained by the reforming reaction extends along the complete fourth side 9 and the complete first side 6 so that a temperature gradient within the first anode flow field 4 can be reduced greatly.

In the second bipolar cell 20, fuel entering the fuel inlet 29 is guided along the complete fourth side 28 and the complete first side 25 of the second anode flow field 23 and the fuel enters the cell reaction zone 32 via the first side 25 and flowing across cell reaction zone 32 along a second direction, which is orthogonal to the first direction. Consequently, the cool zone 33 supplying cooled fuel obtained by the reforming reaction extends along the complete fourth side 28 and the complete first side 25 of the second anode flow field 23 so that a temperature gradient within the second anode flow field 23 can be reduced greatly.

When analysing the temperature profile across the whole cell stack including the first and second bipolar plates 1, 20, due to the supply of cooled fuel along four different sides of the cell stack, the temperature profile are balanced and heat gradients are reduced. In other words, when viewing the cell stack in a stacking direction, cool areas 14 and 33 are provided at four different sides of the cell stack which harmonizes the temperature differences between hot areas and cool areas within the cell stack to a maximum, whereby overheating of the cell stack can be prevented efficiently and thus, a life span of the cell stack can be increased largely.

Figure 8 including Figure 8a and Figure 8b shows a cell stack according to a seventh embodiment including a first bipolar plate 1 and a second bipolar plate 20. The arrangement of the first bipolar cell 1 and the second bipolar cell 20 as well as the elements denominated with the same reference numbers are similar to those of the seventh embodiment.

Fuel inlet 10 is provided at the edge of the second side 7 and the third side 8 and fuel outlet 11 is provided at the edge of the first side 6 and the fourth side 9. In addition, fuel inlet 29 is provided at the edge of the first side 25 and the fourth side 28 and fuel outlet 30 is provided at the edge of the second side 26 and the third side 27. When viewing the cell stack along a stacking direction of the first bipolar plate 1 and the second bipolar plate 20, the first side 6 of the first anode flow field 4 is aligned upon the third side 27 of the second anode flow field 23, whereas the first side 25 of the second anode flow field 23 is aligned upon the third side 8 of the first anode flow field 4.

Accordingly, fuel entering the fuel inlet 10 is guided along the complete third side 8 and the complete first side 6 of the first anode flow field 4 and entering the cell reaction zone 13 via the first side 6 and flowing across cell reaction zone 13 along a first direction. Consequently, the cool zone 14 supplying cooled fuel obtained by the reforming reaction extends along the complete third side 8 and the complete first side 6 so that a temperature gradient within the first anode flow field 4 can be reduced greatly.

In the second bipolar cell 20, fuel entering the fuel inlet 29 is guided along the complete first side 25 and the complete fourth side 28 of the second anode flow field 23 and the fuel enters the cell reaction zone 32 via the first side 25 and flows across cell reaction zone 32 along a second direction, which is orthogonal to the first direction. Consequently, the cool zone 33 supplying cooled fuel obtained by the reforming reaction extends along the complete first side 25 and the complete fourth side 28 of the second anode flow field 23 so that a temperature gradient within the second anode flow field 23 can be reduced greatly.

When analysing the temperature profile across the whole cell stack including the first and second bipolar plates 1, 20, due to the supply of cooled fuel along three different sides of the cell stack, the temperature profile are balanced and heat gradients are reduced. In other words, when viewing the cell stack in a stacking direction, cool areas 14 and 33 are provided at three different sides of the cell stack which harmonizes the temperature differences between hot areas and cool areas within the cell stack, whereby overheating of the cell stack can be prevented efficiently and thus, a life span of the cell stack can be increased largely.

### Reference sign list

- 1: first bipolar plate
- 2: first surface of the first bipolar plate
- 3: second surface of the first bipolar plate
- 4: first anode flow field
- 5: plurality of parallel channels
- 6: first side of the first anode flow field
- 7: second side of the first anode flow field
- 8: third side of the first anode flow field
- 9: fourth side of the first anode flow field
- 10: fuel inlet
- 11: fuel outlet
- 12: barrier element
- 13: cell reaction zone
- 14: cool area
- 15: barrier element
- 16: oxidant inlet
- 20: second bipolar plate
- 21: first surface of the second bipolar plate
- 22: second surface of the second bipolar plate
- 23: second anode flow field
- 24: plurality of parallel channels
- 25: first side of the second anode flow field
- 26: second side of the second anode flow field
- 27: third side of the second anode flow field
- 28: fourth side of the second anode flow field
- 29: fuel inlet
- 30: fuel outlet
- 31: barrier element
- 32: cell reaction zone
- 33: cool area
- 34: barrier element
- 35: oxidant inlet

## Claims

1. A cell stack for an electrochemical cell comprising:
- a first cell comprising a first bipolar plate (1) comprising a first anode flow field (4) on a first surface (2) of the first bipolar plate (1),
- a second cell comprising a second bipolar plate (20) comprising a second anode flow field (23) on a first surface (21) of the second bipolar plate (20),
- the first anode flow field (4) comprising a plurality of parallel channels (5) providing flow paths for the fuel across the first anode flow field (4) from a first side (6) of the first anode flow field (4) to an opposite second side (7) of the first anode flow field (4), so that fuel flows along a first direction,
- the second anode flow field (23) comprising a plurality of parallel channels (24) providing flow paths for the fuel across the second anode flow field (23) from a first side (25) of the second anode flow field (23) to an opposite second side (26) of the second anode flow field (23), so that fuel flows along a second direction,
wherein the first and second anode flow field (4, 23) have a rectangular shape and include a first, a second, a third and a fourth side,
wherein the first direction and the second direction are different, **characterized in that**
fuel inlets (10, 29) of the first cell and the second cell are superimposed and/or fuel outlets (11, 30) of the first cell and the second cell are superimposed when viewed in the stacking direction.

2. The cell stack according to claim 1, wherein the first direction is orthogonal or opposite to the second direction.

3. The cell stack according to claim 1 or 2, wherein the fuel inlets (10, 29) and the fuel outlets (11, 30) are positioned opposite to each other.

4. The cell stack according to claim 3, wherein the fuel inlets (10, 29) are provided at mid portions of third sides (7, 27) of the first and second anode flow fields (4, 23) and the fuel outlets (11, 30) are provided at mid portions of fourth sides (9, 28) of the first and second anode flow fields (4, 23).

5. The cell stack according to claim 4, wherein when the cell stack is viewed in the stacking direction, the first side (6) of the first anode flow field (4) is aligned upon the second side (26) of the second anode flow field (23).

6. The cell stack according to claim 4 or 5, wherein at least one barrier element (12), which is a constitutional element of the bipolar plate, which is dimensioned and shaped to prevent fuel from flowing across the direction at which the barrier element is positioned, is provided at the third side (8) of the first anode flow field (4) at a hind portion of the fuel inlet (10) facing away from the first side (6) of the first anode flow field (4) and wherein at least one barrier element (31) is provided at the third side (27) of the second anode flow field (23) at a hind portion of the fuel inlet (29) facing away from the first side (25) of the second anode flow field (23).

7. The cell stack according to any of claims 4 to 6, wherein at least one barrier element (15) is provided at the fourth side (9) of the first anode flow field (4) at a hind portion of the fuel outlet (11) facing away from the second side (7) of the first anode flow field (4) and wherein at least one barrier element (34) is provided at the fourth side (28) of the second anode flow field (23) at a hind portion of the fuel outlet (30) facing away from the second side (26) of the second anode flow field (23).

8. The cell stack according to claim 3, wherein the fuel inlets (10, 29) and the fuel outlets (11, 30) are arranged at opposite diagonal edges of the first anode flow field (4) and the second anode flow field (23).

9. The cell stack according to claim 8, wherein the plurality of channels (5) of the first anode flow field (4) is parallel to the plurality of channels (24) of the second anode flow field (23).

10. The cell stack according to claim 8 or 9, wherein when the cell stack is viewed in the stacking direction, the first side (6) of the first anode flow field (4) is aligned upon the second side (26) of the second anode flow field (23).

11. The cell stack according to any of claims 8 to 10, wherein the fuel inlet (10) of the first anode flow field (4) is at the edge of the second side (7) and the third side (8) of the first anode flow field (4), wherein the fuel outlet (11) of the first anode flow field (4) is at the edge of the first side (6) and the fourth side (9) of the first anode flow field (4), wherein at least one barrier element (12) is provided at the second side (7) of the first anode flow field (4) at a hind portion of the fuel inlet (10) facing away from the third side (8) of the first anode flow field (4), wherein at least one barrier element (15) is provided at the first side (6) of the first anode flow field (4) at a hind portion of the fuel outlet (11) facing away from the fourth side (9) of the first anode flow field (4),
wherein the fuel inlet (29) of the second anode flow field (23) is at the edge of the first side (25) and the third side (27) of the second anode flow field (23), wherein the fuel outlet (30) of the second anode flow field (23) is at the edge of the second side (26) and the fourth side (28) of the second anode flow field (23), and wherein optionally at least one barrier (31) element is provided at the third side (27) of the second anode flow field (23) at a hind portion of the fuel inlet (29) facing away from the first side (25) of the second anode flow field (23).

12. The cell stack according to any of claims 8 to 10, wherein the fuel inlet (10) of the first anode flow field (4) is at the edge of the first side (6) and the third side (8) of the first anode flow field (4), wherein the fuel outlet (11) of the first anode flow field (4) is at the edge of the second side (7) and the fourth side (9) of the first anode flow field (4), wherein optionally at least one barrier element (12) is provided at the third side (8) of the first anode flow field (4) at a hind portion of the fuel inlet (10) facing away from the first side (6) of the first anode flow field (4),
wherein the fuel inlet (29) of the second anode flow field (23) is at the edge of the second side (26) and the third side (27) of the second anode flow field (23), wherein the fuel outlet (30) of the second anode flow field (23) is at the edge of the first side (25) and the fourth side (28) of the second anode flow field (23), wherein at least one barrier element (31) is provided at the second side (26) of the second anode flow field (23) at a hind portion of the fuel inlet (29) facing away from the third side (27) of the second anode flow field (23), and wherein at least one barrier element (34) is provided at the first side (25) of the second anode flow field (23) at a hind portion of the fuel outlet (30) facing away from the fourth side (28) of the second anode flow field (23).

13. The cell stack according to any of claims 8 to 10, wherein the fuel inlet (10) of the first anode flow field (4) is at the edge of the first side (6) and the fourth side (9) of the first anode flow field (4), wherein the fuel outlet (11) of the first anode flow field (4) is at the edge of the second side (7) and the third side (8) of the first anode flow field (4), wherein at least one barrier element (12) is provided at the fourth side (9) of the first anode flow field (4) at a hind portion of the fuel inlet (10) facing away from the first side (6) of the first anode flow field (4), wherein the fuel inlet (29) of the second anode flow field (23) is at the edge of the second side (26) and the fourth side (28) of the second anode flow field (23), wherein the fuel outlet (30) of the second anode flow field (23) is at the edge of the first side (25) and the third side (27) of the second anode flow field (23), and wherein at least one barrier element (31) is provided at the second side (26) of the second anode flow field (23) at a hind portion of the fuel inlet (29) facing away from the fourth side (28) of the second anode flow field (23), and wherein at least one barrier element (34) is provided at the first side (25) of the second anode flow field (23) at a hind portion of the fuel outlet (30) facing away from the third side (27) of the second anode flow field (23).

14. The cell stack according to any of claims 8 to 10, wherein the fuel inlet (10) of the first anode flow field (4) is at the edge of the second side (7) and the fourth side (9) of the first anode flow field (4), wherein the fuel outlet (11) of the first anode flow field (4) is at the edge of the first side (6) and the third side (8) of the first anode flow field (4), wherein at least one barrier element (12) is provided at the second side (7) of the first anode flow field (4) at a hind portion of the fuel inlet (10) facing away from the fourth side (9) of the first anode flow field (4), wherein at least one barrier element (15) is provided at the first side (6) of the first anode flow field (4) at a hind portion of the fuel outlet (11) facing away from the third side (8) of the first anode flow field (4),
wherein the fuel inlet (29) of the second anode flow field (23) is at the edge of the first side (25) and the fourth side (28) of the second anode flow field (23), wherein the fuel outlet (30) of the second anode flow field (23) is at the edge of the second side (26) and the third side (27) of the second anode flow field (23), and wherein optionally at least one barrier element (31) is provided at the fourth side (28) of the second anode flow field (23) at a hind portion of the fuel inlet (29) facing away from the first side (25) of the second anode flow field (23).

15. The cell stack according to claim 8, wherein the plurality of channels (5) of the first anode flow field (4) is perpendicular to the plurality of channels (24) of the second anode flow field (23).

16. The cell stack according to claim 15, wherein the fuel inlet (10) of the first anode flow field (4) is at the edge of the first side (6) and the third side (8) of the first anode flow field (4), wherein the fuel outlet (11) of the first anode flow field (4) is at the edge of the second side (7) and the fourth side (9) of the first anode flow field (4), wherein optionally at least one barrier element (12) is provided at the third side (8) of the first anode flow field (4) at a hind portion of the fuel inlet (10) facing away from the first side (6) of the first anode flow field (4), wherein the fuel inlet (29) of the second anode flow field (23) is at the edge of the first side (25) and the third side (27) of the second anode flow field (23), wherein the fuel outlet (30) of the second anode flow field (23) is at the edge of the second side (26) and the fourth side (28) of the second anode flow field (23), and wherein optionally at least one barrier element (34) is provided at the third side (27) of the second anode flow field (23) at a hind portion of the fuel inlet (29) facing away from the first side (25) of the second anode flow field (23).

17. The cell stack according to claim 15, wherein the fuel inlet (10) of the first anode flow field (4) is at the edge of the second side (7) and the fourth side (9) of the first anode flow field (4), wherein the fuel outlet (11) of the first anode flow field (4) is at the edge of the first side (6) and the third side (8) of the first anode flow field (4), wherein at least one barrier element (12) is provided at the second side (7) of the first anode flow field (4) at a hind portion of the fuel inlet (10) facing away from the fourth side (9) of the first anode flow field (4), wherein at least one barrier element (15) is provided at the first side (6) of the first anode flow field (4) at a hind portion of the fuel outlet (11) facing away from the third side (8) of the first anode flow field (4),
wherein the fuel inlet (29) of the second anode flow field (23) is at the edge of the second side (26) and the fourth side (28) of the second anode flow field (23), wherein the fuel outlet (30) of the second anode flow field (23) is at the edge of the first side (25) and the third side (27) of the second anode flow field (23), wherein at least one barrier element (31) is provided at the second side (26) of the second anode flow field (23) at a hind portion of the fuel inlet (29) facing away from the fourth side (28) of the second anode flow field (23), and wherein at least one barrier element (34) is provided at the first side (25) of the second anode flow field (23) at a hind portion of the fuel outlet (30) facing away from the third side (27) of the second anode flow field (23).

18. The cell stack according to claim 15, wherein the fuel inlet (10) of the first anode flow field (4) is at the edge of the second side (7) and the third side (8) of the first anode flow field (4), wherein the fuel outlet (11) of the first anode flow field (4) is at the edge of the first side (6) and the fourth side (9) of the first anode flow field (4), wherein at least one barrier element (12) is provided at the second side (7) of the first anode flow field (4) at a hind portion of the fuel inlet (10) facing away from the third side (8) of the first anode flow field (4), wherein at least one barrier element (15) is provided at the first side (6) of the first anode flow field (4) at a hind portion of the fuel outlet (11) facing away from the fourth side (9) of the first anode flow field (4),
wherein the fuel inlet (29) of the second anode flow field (23) is at the edge of the first side (25) and the fourth side (28) of the second anode flow field (23), wherein the fuel outlet (30) of the second anode flow field (23) is at the edge of the second side (26) and the third side (27) of the second anode flow field (23), and wherein optionally at least one barrier element (31) is provided at the fourth side (28) of the second anode flow field (23) at a hind portion of the fuel inlet (29) facing away from the first side (25) of the second anode flow field (23).

19. The cell stack according to any of claims 1 to 18,
- wherein the fuel inlets (10, 29) are integrated into the first and second anode flow fields (4, 23) at respective boundary portions of the first and second anode flow fields (4, 23) and/or
- wherein the fuel outlets (11, 30) are integrated into the first and second anode flow fields (4, 23) at respective boundary portions of the first and second anode flow fields (4, 23).

20. The cell stack according to any of the preceding claims, wherein at least one oxidant inlet (16, 35) is integrated into the first bipolar plate (1) and into the second bipolar plate (20) at mid portions of the first anode flow field (4) and the second anode flow field (23) or at edges of the first anode flow field (4) and the second anode flow field (23), so that when the cell stack is viewed in the stacking direction, the at least one oxidant inlets (16, 35) in each of the first and second bipolar plates (1, 20) are aligned one upon the other, wherein in particular, the at least one oxidant inlet (16, 35) is integrated into the first bipolar plate (1) and into the second bipolar plate (20).

21. Fuel cell system or electrolysis cell system comprising a cell stack according to any of the preceding claims.

## Patentansprüche

1. Zellstapel für eine elektrochemische Zelle, umfassend:
- eine erste Zelle umfassend eine erste Bipolarplatte (1) umfassend ein erstes Anodenströmungsfeld (4) auf einer ersten Oberfläche (2) der ersten Bipolarplatte (1),
- eine zweite Zelle umfassend eine zweite Bipolarplatte (20) umfassend ein zweites Anodenströmungsfeld (23) auf einer ersten Oberfläche (21) der zweiten Bipolarplatte (20),
- das erste Anodenströmungsfeld (4) umfassend eine Mehrzahl von parallelen Kanälen (5), die Strömungswege für den Brennstoff durch das erste Anodenströmungsfeld (4) von einer ersten Seite (6) des ersten Anodenströmungsfeldes (4) zu einer gegenüberliegenden zweiten Seite (7) des ersten Anodenströmungsfeldes (4) bereitstellen, sodass Brennstoff entlang einer ersten Richtung strömt,
- das zweite Anodenströmungsfeld (23) umfassend eine Mehrzahl von parallelen Kanälen (24), die Strömungswege für den Kraftstoff über das zweite Anodenströmungsfeld (23) von einer ersten Seite (25) des zweiten Anodenströmungsfeldes (23) zu einer gegenüberliegenden zweiten Seite (26) des zweiten Anodenströmungsfeldes (23) bereitstellen, sodass Kraftstoff entlang einer zweiten Richtung strömt,
wobei das erste und das zweite Anodenströmungsfeld (4, 23) eine rechteckige Form umfassen und eine erste, eine zweite, eine dritte und eine vierte Seite umfassen,
wobei die erste Richtung und die zweite Richtung unterschiedlich sind, **dadurch gekennzeichnet, dass**
Brennstoffeinlässe (10, 29) der ersten Zelle und der zweiten Zelle übereinander liegen und/oder Brennstoffauslässe (11, 30) der ersten Zelle und der zweiten Zelle übereinander liegen, wenn in der Stapelrichtung betrachtet.

2. Zellenstapel nach Anspruch 1, wobei die erste Richtung orthogonal oder entgegengesetzt zur zweiten Richtung ist.

3. Zellenstapel nach Anspruch 1 oder 2, wobei die Brennstoffeinlässe (10, 29) und die Brennstoffauslässe (11, 30) einander gegenüberliegend angeordnet sind.

4. Zellenstapel nach Anspruch 3, wobei die Brennstoffeinlässe (10, 29) an mittleren Abschnitten von dritten Seiten (7, 27) der ersten und zweiten Anodenströmungsfelder (4, 23) vorgesehen sind und die Brennstoffauslässe (11, 30) an mittleren Abschnitten von vierten Seiten (9, 28) der ersten und zweiten Anodenströmungsfelder (4, 23) vorgesehen sind.

5. Zellenstapel nach Anspruch 4, wobei, wenn der Zellenstapel in der Stapelrichtung betrachtet wird, die erste Seite (6) des ersten Anodenströmungsfeldes (4) nach der zweiten Seite (26) des zweiten Anodenströmungsfeldes (23) ausgerichtet ist.

6. Zellenstapel nach Anspruch 4 oder 5, wobei mindestens ein Barriereelement (12), das ein konstitutives Element der Bipolarplatte ist, das dimensioniert und geformt ist, zu verhindern, dass Brennstoff quer zu der Richtung strömt, in der das Barriereelement positioniert ist, an der dritten Seite (8) des ersten Anodenströmungsfeldes (4) an einem hinteren Abschnitt des Brennstoffeinlasses (10) vorgesehen ist, der von der ersten Seite (6) des ersten Anodenströmungsfeldes (4) abgewandt ist, und wobei mindestens ein Barriereelement (31) an der dritten Seite (27) des zweiten Anodenströmungsfeldes (23) an einem hinteren Abschnitt des Brennstoffeinlasses (29) vorgesehen ist, der von der ersten Seite (25) des zweiten Anodenströmungsfeldes (23) abgewandt ist.

7. Zellenstapel nach einem der Ansprüche 4 bis 6, wobei mindestens ein Barriereelement (15) an der vierten Seite (9) des ersten Anodenströmungsfeldes (4) an einem hinteren Abschnitt des Brennstoffauslasses (11) vorgesehen ist, der von der zweiten Seite (7) des ersten Anodenströmungsfeldes (4) abgewandt ist, und wobei mindestens ein Barriereelement (34) an der vierten Seite (28) des zweiten Anodenströmungsfeldes (23) an einem hinteren Abschnitt des Brennstoffauslasses (30) vorgesehen ist, der von der zweiten Seite (26) des zweiten Anodenströmungsfeldes (23) abgewandt ist.

8. Zellenstapel nach Anspruch 3, wobei die Brennstoffeinlässe (10, 29) und die Brennstoffauslässe (11, 30) an gegenüberliegenden diagonalen Rändern des ersten Anodenströmungsfeldes (4) und des zweiten Anodenströmungsfeldes (23) angeordnet sind.

9. Zellenstapel nach Anspruch 8, wobei die Mehrzahl von Kanälen (5) des ersten Anodenströmungsfeldes (4) parallel zu der Mehrzahl von Kanälen (24) des zweiten Anodenströmungsfeldes (23) verläuft.

10. Zellenstapel nach Anspruch 8 oder 9, wobei, wenn der Zellenstapel in der Stapelrichtung betrachtet wird, die erste Seite (6) des ersten Anodenströmungsfeldes (4) nach der zweiten Seite (26) des zweiten Anodenströmungsfeldes (23) ausgerichtet ist.

11. Zellenstapel nach einem der Ansprüche 8 bis 10, wobei der Brennstoffeinlass (10) des ersten Anodenströmungsfeldes (4) am Rand der zweiten Seite (7) und der dritten Seite (8) des ersten Anodenströmungsfeldes (4) liegt, wobei der Brennstoffauslass (11) des ersten Anodenströmungsfeldes (4) am Rand der ersten Seite (6) und der vierten Seite (9) des ersten Anodenströmungsfeldes (4) liegt, wobei mindestens ein Barriereelement (12) an der zweiten Seite (7) des ersten Anodenströmungsfeldes (4) an einem hinteren Abschnitt des Brennstoffeinlasses (10) vorgesehen ist, der von der dritten Seite (8) des ersten Anodenströmungsfeldes (4) abgewandt ist, wobei mindestens ein Barriereelement (15) an der ersten Seite (6) des ersten Anodenströmungsfeldes (4) an einem hinteren Abschnitt des Brennstoffauslasses (11) vorgesehen ist, der von der vierten Seite (9) des ersten Anodenströmungsfeldes (4) abgewandt ist,
wobei der Brennstoffeinlass (29) des zweiten Anodenströmungsfeldes (23) am Rand der ersten Seite (25) und der dritten Seite (27) des zweiten Anodenströmungsfeldes (23) liegt, wobei der Brennstoffauslass (30) des zweiten Anodenströmungsfeldes (23) am Rand der zweiten Seite (26) und der vierten Seite (28) des zweiten Anodenströmungsfeldes (23) liegt, und wobei optional mindestens ein Barriereelement (31) an der dritten Seite (27) des zweiten Anodenströmungsfeldes (23) an einem hinteren Abschnitt des Brennstoffeinlasses (29) vorgesehen ist, der von der ersten Seite (25) des zweiten Anodenströmungsfeldes (23) abgewandt ist.

12. Zellenstapel nach einem der Ansprüche 8 bis 10, wobei der Brennstoffeinlass (10) des ersten Anodenströmungsfeldes (4) am Rand der ersten Seite (6) und der dritten Seite (8) des ersten Anodenströmungsfeldes (4) liegt, wobei der Brennstoffauslass (11) des ersten Anodenströmungsfeldes (4) am Rand der zweiten Seite (7) und der vierten Seite (9) des ersten Anodenströmungsfeldes (4) liegt, wobei optional mindestens ein Barriereelement (12) an der dritten Seite (8) des ersten Anodenströmungsfeldes (4) an einem hinteren Abschnitt des Brennstoffeinlasses (10) vorgesehen ist, der von der ersten Seite (6) des ersten Anodenströmungsfeldes (4) abgewandt ist,
wobei der Brennstoffeinlass (29) des zweiten Anodenströmungsfeldes (23) am Rand der zweiten Seite (26) und der dritten Seite (27) des zweiten Anodenströmungsfeldes (23) liegt, wobei der Brennstoffauslass (30) des zweiten Anodenströmungsfeldes (23) am Rand der ersten Seite (25) und der vierten Seite (28) des zweiten Anodenströmungsfeldes (23) liegt, wobei mindestens ein Barriereelement (31) an der zweiten Seite (26) des zweiten Anodenströmungsfeldes (23) an einem hinteren Abschnitt des Brennstoffeinlasses (29) vorgesehen ist, der von der dritten Seite (27) des zweiten Anodenströmungsfeldes (23) abgewandt ist, und wobei mindestens ein Barriereelement (34) an der ersten Seite (25) des zweiten Anodenströmungsfeldes (23) an einem hinteren Abschnitt des Brennstoffauslasses (30) vorgesehen ist, der von der vierten Seite (28) des zweiten Anodenströmungsfeldes (23) abgewandt ist.

13. Zellenstapel nach einem der Ansprüche 8 bis 10, wobei der Brennstoffeinlass (10) des ersten Anodenströmungsfeldes (4) am Rand der ersten Seite (6) und der vierten Seite (9) des ersten Anodenströmungsfeldes (4) liegt, wobei der Brennstoffauslass (11) des ersten Anodenströmungsfeldes (4) am Rand der zweiten Seite (7) und der dritten Seite (8) des ersten Anodenströmungsfeldes (4) liegt, wobei mindestens ein Barriereelement (12) an der vierten Seite (9) des ersten Anodenströmungsfeldes (4) an einem hinteren Abschnitt des Brennstoffeinlasses (10) vorgesehen ist, der von der ersten Seite (6) des ersten Anodenströmungsfeldes (4) abgewandt ist, wobei der Brennstoffeinlass (29) des zweiten Anodenströmungsfeldes (23) am Rand der zweiten Seite (26) und der vierten Seite (28) des zweiten Anodenströmungsfeldes (23) liegt, wobei der Brennstoffauslass (30) des zweiten Anodenströmungsfeldes (23) am Rand der ersten Seite (25) und der dritten Seite (27) des zweiten Anodenströmungsfeldes (23) liegt, und wobei mindestens ein Barriereelement (31) an der zweiten Seite (26) des zweiten Anodenströmungsfeldes (23) an einem hinteren Abschnitt des Brennstoffeinlasses (29) vorgesehen ist, der von der vierten Seite (28) des zweiten Anodenströmungsfeldes (23) abgewandt ist, und wobei mindestens ein Barriereelement (34) an der ersten Seite (25) des zweiten Anodenströmungsfeldes (23) an einem hinteren Abschnitt des Brennstoffauslasses (30) vorgesehen ist, der von der dritten Seite (27) des zweiten Anodenströmungsfeldes (23) abgewandt ist.

14. Zellenstapel nach einem der Ansprüche 8 bis 10, wobei der Brennstoffeinlass (10) des ersten Anodenströmungsfeldes (4) am Rand der zweiten Seite (7) und der vierten Seite (9) des ersten Anodenströmungsfeldes (4) liegt, wobei der Brennstoffauslass (11) des ersten Anodenströmungsfeldes (4) am Rand der ersten Seite (6) und der dritten Seite (8) des ersten Anodenströmungsfeldes (4) liegt, wobei mindestens ein Barriereelement (12) an der zweiten Seite (7) des ersten Anodenströmungsfeldes (4) an einem hinteren Abschnitt des Brennstoffeinlasses (10) vorgesehen ist, der von der vierten Seite (9) des ersten Anodenströmungsfeldes (4) abgewandt ist, wobei mindestens ein Barriereelement (15) an der ersten Seite (6) des ersten Anodenströmungsfeldes (4) an einem hinteren Abschnitt des Brennstoffauslasses (11) vorgesehen ist, der von der dritten Seite (8) des ersten Anodenströmungsfeldes (4) abgewandt ist,
wobei der Brennstoffeinlass (29) des zweiten Anodenströmungsfeldes (23) am Rand der ersten Seite (25) und der vierten Seite (28) des zweiten Anodenströmungsfeldes (23) liegt, wobei der Brennstoffauslass (30) des zweiten Anodenströmungsfeldes (23) am Rand der zweiten Seite (26) und der dritten Seite (27) des zweiten Anodenströmungsfeldes (23) liegt, und wobei optional mindestens ein Barriereelement (31) an der vierten Seite (28) des zweiten Anodenströmungsfeldes (23) an einem hinteren Abschnitt des Brennstoffeinlasses (29) vorgesehen ist, der von der ersten Seite (25) des zweiten Anodenströmungsfeldes (23) abgewandt ist.

15. Zellenstapel nach Anspruch 8, wobei die Mehrzahl von Kanälen (5) des ersten Anodenströmungsfeldes (4) senkrecht zu der Mehrzahl von Kanälen (24) des zweiten Anodenströmungsfeldes (23) ist.

16. Zellenstapel nach Anspruch 15, wobei der Brennstoffeinlass (10) des ersten Anodenströmungsfeldes (4) am Rand der ersten Seite (6) und der dritten Seite (8) des ersten Anodenströmungsfeldes (4) liegt, wobei der Brennstoffauslass (11) des ersten Anodenströmungsfeldes (4) am Rand der zweiten Seite (7) und der vierten Seite (9) des ersten Anodenströmungsfeldes (4) liegt, wobei optional mindestens ein Barriereelement (12) an der dritten Seite (8) des ersten Anodenströmungsfeldes (4) an einem hinteren Abschnitt des Brennstoffeinlasses (10) vorgesehen ist, der von der ersten Seite (6) des ersten Anodenströmungsfeldes (4) abgewandt ist,
wobei der Brennstoffeinlass (29) des zweiten Anodenströmungsfeldes (23) am Rand der ersten Seite (25) und der dritten Seite (27) des zweiten Anodenströmungsfeldes (23) liegt, wobei der Brennstoffauslass (30) des zweiten Anodenströmungsfeldes (23) am Rand der zweiten Seite (26) und der vierten Seite (28) des zweiten Anodenströmungsfeldes (23) liegt, und wobei optional mindestens ein Barriereelement (34) an der dritten Seite (27) des zweiten Anodenströmungsfeldes (23) an einem hinteren Abschnitt des Brennstoffeinlasses (29) vorgesehen ist, der von der ersten Seite (25) des zweiten Anodenströmungsfeldes (23) abgewandt ist.

17. Zellenstapel nach Anspruch 15, wobei der Brennstoffeinlass (10) des ersten Anodenströmungsfeldes (4) am Rand der zweiten Seite (7) und der vierten Seite (9) des ersten Anodenströmungsfeldes (4) liegt, wobei der Brennstoffauslass (11) des ersten Anodenströmungsfeldes (4) am Rand der ersten Seite (6) und der dritten Seite (8) des ersten Anodenströmungsfeldes (4) liegt, wobei mindestens ein Barriereelement (12) an der zweiten Seite (7) des ersten Anodenströmungsfeldes (4) an einem hinteren Abschnitt des Brennstoffeinlasses (10) vorgesehen ist, der von der vierten Seite (9) des ersten Anodenströmungsfeldes (4) abgewandt ist, wobei mindestens ein Barriereelement (15) an der ersten Seite (6) des ersten Anodenströmungsfeldes (4) an einem hinteren Abschnitt des Brennstoffauslasses (11) vorgesehen ist, der von der dritten Seite (8) des ersten Anodenströmungsfeldes (4) abgewandt ist,
wobei der Brennstoffeinlass (29) des zweiten Anodenströmungsfeldes (23) am Rand der zweiten Seite (26) und der vierten Seite (28) des zweiten Anodenströmungsfeldes (23) liegt, wobei der Brennstoffauslass (30) des zweiten Anodenströmungsfeldes (23) am Rand der ersten Seite (25) und der dritten Seite (27) des zweiten Anodenströmungsfeldes (23) liegt, wobei mindestens ein Barriereelement (31) an der zweiten Seite (26) des zweiten Anodenströmungsfeldes (23) an einem hinteren Abschnitt des Brennstoffeinlasses (29) vorgesehen ist, der von der vierten Seite (28) des zweiten Anodenströmungsfeldes (23) abgewandt ist, und wobei mindestens ein Barriereelement (34) an der ersten Seite (25) des zweiten Anodenströmungsfeldes (23) an einem hinteren Abschnitt des Brennstoffauslasses (30) vorgesehen ist, der von der dritten Seite (27) des zweiten Anodenströmungsfeldes (23) abgewandt ist.

18. Zellenstapel nach Anspruch 15, wobei der Brennstoffeinlass (10) des ersten Anodenströmungsfeldes (4) am Rand der zweiten Seite (7) und der dritten Seite (8) des ersten Anodenströmungsfeldes (4) ist, wobei der Brennstoffauslass (11) des ersten Anodenströmungsfeldes (4) am Rand der ersten Seite (6) und der vierten Seite (9) des ersten Anodenströmungsfeldes (4) liegt, wobei mindestens ein Barriereelement (12) an der zweiten Seite (7) des ersten Anodenströmungsfeldes (4) an einem hinteren Abschnitt des Brennstoffeinlasses (10) vorgesehen ist, der von der dritten Seite (8) des ersten Anodenströmungsfeldes (4) abgewandt ist, wobei mindestens ein Barriereelement (15) an der ersten Seite (6) des ersten Anodenströmungsfeldes (4) an einem hinteren Abschnitt des Brennstoffauslasses (11) vorgesehen ist, der von der vierten Seite (9) des ersten Anodenströmungsfeldes (4) abgewandt ist,
wobei der Brennstoffeinlass (29) des zweiten Anodenströmungsfeldes (23) am Rand der ersten Seite (25) und der vierten Seite (28) des zweiten Anodenströmungsfeldes (23) liegt, wobei der Brennstoffauslass (30) des zweiten Anodenströmungsfeldes (23) am Rand der zweiten Seite (26) und der dritten Seite (27) des zweiten Anodenströmungsfeldes (23) liegt, und wobei optional mindestens ein Barriereelement (31) an der vierten Seite (28) des zweiten Anodenströmungsfeldes (23) an einem hinteren Abschnitt des Brennstoffeinlasses (29) vorgesehen ist, der von der ersten Seite (25) des zweiten Anodenströmungsfeldes (23) abgewandt ist.

19. Zellenstapel nach einem der Ansprüche 1 bis 18,
- wobei die Brennstoffeinlässe (10, 29) in die ersten und zweiten Anodenströmungsfelder (4, 23) an jeweiligen Grenzabschnitten der ersten und zweiten Anodenströmungsfelder (4, 23) integriert sind und/oder
- wobei die Brennstoffauslässe (11, 30) in die ersten und zweiten Anodenströmungsfelder (4, 23) an jeweiligen Grenzabschnitten der ersten und zweiten Anodenströmungsfelder (4, 23) integriert sind.

20. Zellenstapel nach einem der vorhergehenden Ansprüche, wobei mindestens ein Oxidationsmitteleinlass (16, 35) in die erste Bipolarplatte (1) und in die zweite Bipolarplatte (20) an Mittelabschnitten des ersten Anodenströmungsfeldes (4) und des zweiten Anodenströmungsfeldes (23) oder an Rändern des ersten Anodenströmungsfeldes (4) und des zweiten Anodenströmungsfeldes (23) integriert ist, sodass, wenn der Zellenstapel in der Stapelrichtung betrachtet wird, die mindestens einen Oxidationsmitteleinlässe (16, 35) in jeder der ersten und zweiten Bipolarplatten (1, 20) übereinander ausgerichtet sind, wobei insbesondere der mindestens eine Oxidationsmitteleinlass (16, 35) in die erste Bipolarplatte (1) und in die zweite Bipolarplatte (20) integriert ist.

21. Brennstoffzellensystem oder Elektrolysezellensystem umfassend einen Zellenstapel nach einem der vorhergehenden Ansprüche.

## Revendications

1. Empilement de cellules pour une cellule électrochimique comprenant :
- une première cellule comprenant une première plaque bipolaire (1) comprenant un premier champ d'écoulement d'anode (4) sur une première surface (2) de la première plaque bipolaire (1),
- une seconde cellule comprenant une seconde plaque bipolaire (20) comprenant un second champ d'écoulement d'anode (23) sur une première surface (21) de la seconde plaque bipolaire (20),
- le premier champ d'écoulement d'anode (4) comprenant une pluralité de canaux parallèles (5) fournissant des chemins d'écoulement pour le combustible à travers le premier champ d'écoulement d'anode (4) d'un premier côté (6) du premier champ d'écoulement d'anode (4) à un second côté opposé (7) du premier champ d'écoulement d'anode (4), de sorte que le combustible s'écoule le long d'une première direction,
- le second champ d'écoulement d'anode (23) comprenant une pluralité de canaux parallèles (24) fournissant des chemins d'écoulement pour le combustible à travers le second champ d'écoulement d'anode (23) d'un premier côté (25) du second champ d'écoulement d'anode (23) à un second côté opposé (26) du second champ d'écoulement d'anode (23), de sorte que le combustible s'écoule le long d'une seconde direction,
dans lequel les premier et second champs d'écoulement d'anode (4, 23) ont une forme rectangulaire et comprennent un premier, un deuxième, un troisième et un quatrième côté,
dans lequel la première direction et la seconde direction sont différentes, **caractérisé en ce que**
des entrées de combustible (10, 29) de la première cellule et de la seconde cellule sont superposées et/ou des sorties de combustible (11, 30) de la première cellule et de la seconde cellule sont superposées lorsqu'elles sont vues dans la direction d'empilement.

2. Empilement de cellules selon la revendication 1, dans lequel la première direction est orthogonale ou opposée à la seconde direction.

3. Empilement de cellules selon la revendication 1 ou 2, dans lequel les entrées de combustible (10, 29) et les sorties de combustible (11, 30) sont positionnées à l'opposé les unes des autres.

4. Empilement de cellules selon la revendication 3, dans lequel les entrées de combustible (10, 29) sont prévues au niveau de parties médianes de troisièmes côtés (7, 27) des premier et second champs d'écoulement d'anode (4, 23) et les sorties de combustible (11, 30) sont prévues au niveau de parties médianes de quatrièmes côtés (9, 28) des premier et second champs d'écoulement d'anode (4, 23).

5. Empilement de cellules selon la revendication 4, dans lequel lorsque l'empilement de cellules est vu dans la direction d'empilement, le premier côté (6) du premier champ d'écoulement d'anode (4) est aligné sur le second côté (26) du second champ d'écoulement d'anode (23).

6. Empilement de cellules selon la revendication 4 ou 5, dans lequel au moins un élément de barrière (12), qui est un élément constitutionnel de la plaque bipolaire, qui est dimensionné et formé pour empêcher le combustible de s'écouler à travers la direction dans laquelle l'élément de barrière est positionné, est prévu au niveau du troisième côté (8) du premier champ d'écoulement d'anode (4) au niveau d'une partie arrière de l'entrée de combustible (10) orientée à l'opposé du premier côté (6) du premier champ d'écoulement d'anode (4) et dans lequel au moins un élément de barrière (31) est prévu au niveau du troisième côté (27) du second champ d'écoulement d'anode (23) au niveau d'une partie arrière de l'entrée de combustible (29) orientée à l'opposé du premier côté (25) du second champ d'écoulement d'anode (23).

7. Empilement de cellules selon l'une quelconque des revendications 4 à 6, dans lequel au moins un élément de barrière (15) est prévu au niveau du quatrième côté (9) du premier champ d'écoulement d'anode (4) au niveau d'une partie arrière de la sortie de combustible (11) orientée à l'opposé du second côté (7) du premier champ d'écoulement d'anode (4) et dans lequel au moins un élément de barrière (34) est prévu au niveau du quatrième côté (28) du second champ d'écoulement d'anode (23) au niveau d'une partie arrière de la sortie de combustible (30) orientée à l'opposé du second côté (26) du second champ d'écoulement d'anode (23).

8. Empilement de cellules selon la revendication 3, dans lequel les entrées de combustible (10, 29) et les sorties de combustible (11, 30) sont agencées au niveau de bords diagonaux opposés du premier champ d'écoulement d'anode (4) et du second champ d'écoulement d'anode (23).

9. Empilement de cellules selon la revendication 8, dans lequel la pluralité de canaux (5) du premier champ d'écoulement d'anode (4) est parallèle à la pluralité de canaux (24) du second champ d'écoulement d'anode (23).

10. Empilement de cellules selon la revendication 8 ou 9, dans lequel lorsque l'empilement de cellules est vu dans la direction d'empilement, le premier côté (6) du premier champ d'écoulement d'anode (4) est aligné sur le second côté (26) du second champ d'écoulement d'anode (23).

11. Empilement de cellules selon l'une quelconque des revendications 8 à 10, dans lequel l'entrée de combustible (10) du premier champ d'écoulement d'anode (4) est au niveau du bord du second côté (7) et du troisième côté (8) du premier champ d'écoulement d'anode (4), dans lequel la sortie de combustible (11) du premier champ d'écoulement d'anode (4) est au niveau du bord du premier côté (6) et du quatrième côté (9) du premier champ d'écoulement d'anode (4), dans lequel au moins un élément de barrière (12) est prévu au niveau du second côté (7) du premier champ d'écoulement d'anode (4) au niveau d'une partie arrière de l'entrée de combustible (10) orientée à l'opposé du troisième côté (8) du premier champ d'écoulement d'anode (4), dans lequel au moins un élément de barrière (15) est prévu au niveau du premier côté (6) du premier champ d'écoulement d'anode (4) au niveau d'une partie arrière de la sortie de combustible (11) orientée à l'opposé du quatrième côté (9) du premier champ d'écoulement d'anode (4),
dans lequel l'entrée de combustible (29) du second champ d'écoulement d'anode (23) est au niveau du bord du premier côté (25) et du troisième côté (27) du second champ d'écoulement d'anode (23), dans lequel la sortie de combustible (30) du second champ d'écoulement d'anode (23) est au niveau du bord du second côté (26) et du quatrième côté (28) du second champ d'écoulement d'anode (23), et dans lequel facultativement au moins un élément de barrière (31) est prévu au niveau du troisième côté (27) du second champ d'écoulement d'anode (23) au niveau d'une partie arrière de l'entrée de combustible (29) orientée à l'opposé du premier côté (25) du second champ d'écoulement d'anode (23).

12. Empilement de cellules selon l'une quelconque des revendications 8 à 10, dans lequel l'entrée de combustible (10) du premier champ d'écoulement d'anode (4) est au niveau du bord du premier côté (6) et du troisième côté (8) du premier champ d'écoulement d'anode (4), dans lequel la sortie de combustible (11) du premier champ d'écoulement d'anode (4) est au niveau du bord du second côté (7) et du quatrième côté (9) du premier champ d'écoulement d'anode (4), dans lequel facultativement au moins un élément de barrière (12) est prévu au niveau du troisième côté (8) du premier champ d'écoulement d'anode (4) au niveau d'une partie arrière de l'entrée de combustible (10) orientée à l'opposé du premier côté (6) du premier champ d'écoulement d'anode (4),
dans lequel l'entrée de combustible (29) du second champ d'écoulement d'anode (23) est au niveau du bord du second côté (26) et du troisième côté (27) du second champ d'écoulement d'anode (23), dans lequel la sortie de combustible (30) du second champ d'écoulement d'anode (23) est au niveau du bord du premier côté (25) et du quatrième côté (28) du second champ d'écoulement d'anode (23), dans lequel au moins un élément de barrière (31) est prévu au niveau du second côté (26) du second champ d'écoulement d'anode (23) au niveau d'une partie arrière de l'entrée de combustible (29) orientée à l'opposé du troisième côté (27) du second champ d'écoulement d'anode (23), et dans lequel au moins un élément de barrière (34) est prévu au niveau du premier côté (25) du second champ d'écoulement d'anode (23) au niveau d'une partie arrière de la sortie de combustible (30) orientée à l'opposé du quatrième côté (28) du second champ d'écoulement d'anode (23).

13. Empilement de cellules selon l'une quelconque des revendications 8 à 10, dans lequel l'entrée de combustible (10) du premier champ d'écoulement d'anode (4) est au niveau du bord du premier côté (6) et du quatrième côté (9) du premier champ d'écoulement d'anode (4), dans lequel la sortie de combustible (11) du premier champ d'écoulement d'anode (4) est au niveau du bord du second côté (7) et du troisième côté (8) du premier champ d'écoulement d'anode (4), dans lequel au moins un élément de barrière (12) est prévu au niveau du quatrième côté (9) du premier champ d'écoulement d'anode (4) au niveau d'une partie arrière de l'entrée de combustible (10) orientée à l'opposé du premier côté (6) du premier champ d'écoulement d'anode (4),
dans lequel l'entrée de combustible (29) du second champ d'écoulement d'anode (23) est au niveau du bord du second côté (26) et du quatrième côté (28) du second champ d'écoulement d'anode (23), dans lequel la sortie de combustible (30) du second champ d'écoulement d'anode (23) est au niveau du bord du premier côté (25) et du troisième côté (27) du second champ d'écoulement d'anode (23), et dans lequel au moins un élément de barrière (31) est prévu au niveau du second côté (26) du second champ d'écoulement d'anode (23) au niveau d'une partie arrière de l'entrée de combustible (29) orientée à l'opposé du quatrième côté (28) du second champ d'écoulement d'anode (23), et dans lequel au moins un élément de barrière (34) est prévu au niveau du premier côté (25) du second champ d'écoulement d'anode (23) au niveau d'une partie arrière de la sortie de combustible (30) orientée à l'opposé du troisième côté (27) du second champ d'écoulement d'anode (23).

14. Empilement de cellules selon l'une quelconque des revendications 8 à 10, dans lequel l'entrée de combustible (10) du premier champ d'écoulement d'anode (4) est au niveau du bord du second côté (7) et du quatrième côté (9) du premier champ d'écoulement d'anode (4), dans lequel la sortie de combustible (11) du premier champ d'écoulement d'anode (4) est au niveau du bord du premier côté (6) et du troisième côté (8) du premier champ d'écoulement d'anode (4), dans lequel au moins un élément de barrière (12) est prévu au niveau du second côté (7) du premier champ d'écoulement d'anode (4) au niveau d'une partie arrière de l'entrée de combustible (10) orientée à l'opposé du quatrième côté (9) du premier champ d'écoulement d'anode (4), dans lequel au moins un élément de barrière (15) est prévu au niveau du premier côté (6) du premier champ d'écoulement d'anode (4) au niveau d'une partie arrière de la sortie de combustible (11) orientée à l'opposé du troisième côté (8) du premier champ d'écoulement d'anode (4),
dans lequel l'entrée de combustible (29) du second champ d'écoulement d'anode (23) est au niveau du bord du premier côté (25) et du quatrième côté (28) du second champ d'écoulement d'anode (23), dans lequel la sortie de combustible (30) du second champ d'écoulement d'anode (23) est au niveau du bord du second côté (26) et du troisième côté (27) du second champ d'écoulement d'anode (23), et dans lequel facultativement au moins un élément de barrière (31) est prévu au niveau du quatrième côté (28) du second champ d'écoulement d'anode (23) au niveau d'une partie arrière de l'entrée de combustible (29) orientée à l'opposé du premier côté (25) du second champ d'écoulement d'anode (23).

15. Empilement de cellules selon la revendication 8, dans lequel la pluralité de canaux (5) du premier champ d'écoulement d'anode (4) est perpendiculaire à la pluralité de canaux (24) du second champ d'écoulement d'anode (23).

16. Empilement de cellules selon la revendication 15, dans lequel l'entrée de combustible (10) du premier champ d'écoulement d'anode (4) est au niveau du bord du premier côté (6) et du troisième côté (8) du premier champ d'écoulement d'anode (4), dans lequel la sortie de combustible (11) du premier champ d'écoulement d'anode (4) est au niveau du bord du second côté (7) et du quatrième côté (9) du premier champ d'écoulement d'anode (4), dans lequel facultativement au moins un élément de barrière (12) est prévu au niveau du troisième côté (8) du premier champ d'écoulement d'anode (4) au niveau d'une partie arrière de l'entrée de combustible (10) orientée à l'opposé du premier côté (6) du premier champ d'écoulement d'anode (4),
dans lequel l'entrée de combustible (29) du second champ d'écoulement d'anode (23) est au niveau du bord du premier côté (25) et du troisième côté (27) du second champ d'écoulement d'anode (23), dans lequel la sortie de combustible (30) du second champ d'écoulement d'anode (23) est au niveau du bord du second côté (26) et du quatrième côté (28) du second champ d'écoulement d'anode (23), et dans lequel facultativement au moins un élément de barrière (34) est prévu au niveau du troisième côté (27) du second champ d'écoulement d'anode (23) au niveau d'une partie arrière de l'entrée de combustible (29) orientée à l'opposé du premier côté (25) du second champ d'écoulement d'anode (23).

17. Empilement de cellules selon la revendication 15, dans lequel l'entrée de combustible (10) du premier champ d'écoulement d'anode (4) est au niveau du bord du second côté (7) et du quatrième côté (9) du premier champ d'écoulement d'anode (4), dans lequel la sortie de combustible (11) du premier champ d'écoulement d'anode (4) est au niveau du bord du premier côté (6) et du troisième côté (8) du premier champ d'écoulement d'anode (4), dans lequel au moins un élément de barrière (12) est prévu au niveau du second côté (7) du premier champ d'écoulement d'anode (4) au niveau d'une partie arrière de l'entrée de combustible (10) orientée à l'opposé du quatrième côté (9) du premier champ d'écoulement d'anode (4), dans lequel au moins un élément de barrière (15) est prévu au niveau du premier côté (6) du premier champ d'écoulement d'anode (4) au niveau d'une partie arrière de la sortie de combustible (11) orientée à l'opposé du troisième côté (8) du premier champ d'écoulement d'anode (4),
dans lequel l'entrée de combustible (29) du second champ d'écoulement d'anode (23) est au niveau du bord du second côté (26) et du quatrième côté (28) du second champ d'écoulement d'anode (23), dans lequel la sortie de combustible (30) du second champ d'écoulement d'anode (23) est au niveau du bord du premier côté (25) et du troisième côté (27) du second champ d'écoulement d'anode (23), dans lequel au moins un élément de barrière (31) est prévu au niveau du second côté (26) du second champ d'écoulement d'anode (23) au niveau d'une partie arrière de l'entrée de combustible (29) orientée à l'opposé du quatrième côté (28) du second champ d'écoulement d'anode (23), et dans lequel au moins un élément de barrière (34) est prévu au niveau du premier côté (25) du second champ d'écoulement d'anode (23) au niveau d'une partie arrière de la sortie de combustible (30) orientée à l'opposé du troisième côté (27) du second champ d'écoulement d'anode (23).

18. Empilement de cellules selon la revendication 15, dans lequel l'entrée de combustible (10) du premier champ d'écoulement d'anode (4) est au niveau du bord du second côté (7) et du troisième côté (8) du premier champ d'écoulement d'anode (4), dans lequel la sortie de combustible (11) du premier champ d'écoulement d'anode (4) est au niveau du bord du premier côté (6) et du quatrième côté (9) du premier champ d'écoulement d'anode (4), dans lequel au moins un élément de barrière (12) est prévu au niveau du second côté (7) du premier champ d'écoulement d'anode (4) au niveau d'une partie arrière de l'entrée de combustible (10) orientée à l'opposé du troisième côté (8) du premier champ d'écoulement d'anode (4), dans lequel au moins un élément de barrière (15) est prévu au niveau du premier côté (6) du premier champ d'écoulement d'anode (4) au niveau d'une partie arrière de la sortie de combustible (11) orientée à l'opposé du quatrième côté (9) du premier champ d'écoulement d'anode (4),
dans lequel l'entrée de combustible (29) du second champ d'écoulement d'anode (23) est au niveau du bord du premier côté (25) et du quatrième côté (28) du second champ d'écoulement d'anode (23), dans lequel la sortie de combustible (30) du second champ d'écoulement d'anode (23) est au niveau du bord du second côté (26) et du troisième côté (27) du second champ d'écoulement d'anode (23), et dans lequel facultativement au moins un élément de barrière (31) est prévu au niveau du quatrième côté (28) du second champ d'écoulement d'anode (23) au niveau d'une partie arrière de l'entrée de combustible (29) orientée à l'opposé du premier côté (25) du second champ d'écoulement d'anode (23).

19. Empilement de cellules selon l'une quelconque des revendications 1 à 18,
- dans lequel les entrées de combustible (10, 29) sont intégrées dans les premier et second champs d'écoulement d'anode (4, 23) au niveau de parties limites respectives des premier et second champs d'écoulement d'anode (4, 23) et/ou
- dans lequel les sorties de combustible (11, 30) sont intégrées dans les premier et second champs d'écoulement d'anode (4, 23) au niveau de parties limites respectives des premier et second champs d'écoulement d'anode (4, 23).

20. Empilement de cellules selon l'une quelconque des revendications précédentes, dans lequel au moins une entrée d'oxydant (16, 35) est intégrée dans la première plaque bipolaire (1) et dans la seconde plaque bipolaire (20) au niveau de parties médianes du premier champ d'écoulement d'anode (4) et du second champ d'écoulement d'anode (23) ou au niveau de bords du premier champ d'écoulement d'anode (4) et du second champ d'écoulement d'anode (23), de sorte que lorsque l'empilement de cellules est vu dans la direction d'empilement, l'au moins une entrée d'oxydant (16, 35) dans chacune des première et seconde plaques bipolaires (1, 20) sont alignées l'une sur l'autre, dans lequel en particulier, l'au moins une entrée d'oxydant (16, 35) est intégrée dans la première plaque bipolaire (1) et dans la seconde plaque bipolaire (20).

21. Système de pile à combustible ou système de cellule d'électrolyse comprenant un empilement de cellules selon l'une quelconque des revendications précédentes.
